# EUROPEAN PATENT APPLICATION

(11) **EP 4 779 469 A1**
(43) Date of publication of application: **22.07.2026**
(21) Application number: 24881017.8
(22) Date of filing: 29.05.2024
(51) Int. Cl.: G06F 9/48, G06F 13/42

(54) **COMMUNICATION METHOD AND APPARATUS, CHIP SYSTEM AND ELECTRONIC DEVICE**

(30) Priority: 27.10.2023 CN 202311418850
(71) Applicant: HUAWEI TECHNOLOGIES CO., LTD., Shenzhen 518129 (CN)
(72) Inventor: TANG, Bin, Shenzhen, Guangdong 518129 (CN); LI, Lizhuang, Shenzhen, Guangdong 518129 (CN); SHAO, Minghao, Shenzhen, Guangdong 518129 (CN); YU, Hongliang, Shenzhen, Guangdong 518129 (CN)
(74) Representative: Pfenning, Meinig & Partner mbB
(86) International application number: PCT/CN2024/096167
(87) International publication number: WO 2025/086638

(57) **Abstract**

A communication method and apparatus, a chip system, and an electronic device are provided. A plurality of tasks are executed based on a first chip, and the first chip includes a first scheduler, a first AI accelerator, and a first memory reader. The method includes: The first scheduler outputs a first trigger signal to the first AI accelerator based on a first scheduling subtask; the first AI accelerator performs AI computing to obtain first data based on a first compute subtask, and in response to the first trigger signal, and outputs a first completion signal to the first scheduler to indicate that the first compute subtask has been completed, where the first data is data required by a second chip to perform AI computing; the first scheduler outputs a second trigger signal to the first memory reader based on the first scheduling subtask and the first completion signal; and the first memory reader transmits the first data to the second chip based on a first transmission subtask, and in response to the second trigger signal.

## Description

This application claims priority to Chinese Patent Application No. 202311418850.9, filed with the China National Intellectual Property Administration on October 27, 2023 and entitled "COMMUNICATION METHOD AND APPARATUS, CHIP SYSTEM, AND ELECTRONIC DEVICE", which is incorporated herein by reference in its entirety.

### TECHNICAL FIELD

Embodiments of this application relate to the field of electronic technologies, and in particular, to a communication method and apparatus, a chip system, and an electronic device.

### BACKGROUND

Intelligent driving scenarios require substantial artificial intelligence (artificial intelligence, AI) computational power from chips. If a single chip fails to meet this demand, multiple chips can be combined to expand AI computational power. These chips work together to perform AI computing and data interactions completing the overall AI task. Each of these chips includes components such as a processor, an AI accelerator, and a memory reader. The AI accelerator performs AI computing, and the memory reader transmits data generated by AI computing. However, in scenarios involving AI computing and data interactions across multiple chips, the time overhead is significant.

### SUMMARY

Embodiments of this application provide a communication method and apparatus, a chip system, and an electronic device, to resolve a problem of large time overheads in a conventional technology.

To achieve the foregoing objectives, the following technical solutions are used in embodiments of this application.

According to a first aspect, a communication method is provided. In the method, a plurality of tasks are executed based on a first chip, the plurality of tasks include a first scheduling subtask, a first compute subtask, and a first transmission subtask, and the first chip includes a first scheduler, a first AI accelerator, and a first memory reader. The method includes: The first scheduler outputs a first trigger signal to the first AI accelerator based on the first scheduling subtask; the first AI accelerator performs AI computing to obtain first data based on the first compute subtask, and in response to the first trigger signal, and outputs a first completion signal to the first scheduler, where the first data is data required by a second chip to perform AI computing, and the first completion signal indicates that the first compute subtask has been completed; the first scheduler outputs a second trigger signal to the first memory reader based on the first scheduling subtask and the first completion signal; and the first memory reader transmits the first data to the second chip based on the first transmission subtask, and in response to the second trigger signal.

In the foregoing technical solution, in comparison with AI computing and data transmission processes scheduled by software run by a first processor, AI computing and data transmission processes in this embodiment of this application are scheduled by a hardware unit, namely, the first scheduler. The first scheduler outputs the first trigger signal to the first AI accelerator based on the first scheduling subtask, enabling the first AI accelerator to execute the first compute subtask. In response to the first trigger signal, the first AI accelerator starts to execute the first compute subtask, performs AI computing to obtain the first data, and outputs the first completion signal to the first scheduler, so that the first scheduler learns that the first compute subtask has been completed. The first scheduler outputs the second trigger signal to the first memory reader based on the first scheduling subtask and the first completion signal, enabling the first memory reader to execute the first transmission subtask. In response to the second trigger signal, the first memory reader starts to execute the first transmission subtask and transmits the first data to the second chip. The first scheduler handles scheduling of intra-chip AI computing and inter-chip data transmission in a hardware manner, eliminating the need for processor-based software scheduling for inter-chip communication. Apart from AI computing overheads of the first AI accelerator and data transmission overheads of the first memory reader, scheduling overheads and communication overheads of the first scheduler are low and negligible when compared with software scheduling latency. As a result, latency and jitter caused by scheduling and computation of the first processor can be eliminated, addressing the issue of significant time overhead.

In a possible implementation of the first aspect, that the first scheduler outputs the second trigger signal to the first memory reader based on the first scheduling subtask and the first completion signal includes: The first scheduler outputs the second trigger signal to the first memory reader based on the first scheduling subtask and the first completion signal, and in response to a first indication signal, where the first indication signal indicates that the second chip has processed second data, and the second data is data obtained by the first AI accelerator by performing previous AI computing. In the foregoing possible implementation, the first scheduler may learn, based on the first indication signal, that the second chip has processed the previously sent second data, and an accelerator of the second chip is in an idle state. In this case, the first scheduler may output the second trigger signal to the first memory reader, to schedule the first memory reader to transmit the first data to the second chip. This ensures serial processing between the first chip and the second chip, thereby preventing data overwriting that occurs because the first chip sends the first data that needs to be processed this time to the second chip before the second chip completes processing the previously sent second data. In addition, when compared with periodical data transmission to the second chip, flexibly setting time for transmitting the first data to the second chip based on the first indication signal can further reduce time overheads.

In a possible implementation of the first aspect, the first chip further includes a first notification circuit, and the plurality of tasks further include a first notification subtask. The method further includes: The first notification circuit receives a first notification signal from the second chip based on the first notification subtask, and outputs the first indication signal obtained based on the first notification signal to the first scheduler, where the first notification signal indicates that the second chip has processed the second data. In the foregoing possible implementation, the first chip further includes the first notification circuit, and the first notification circuit receives the first notification signal from the second chip based on the first notification subtask, obtains the first indication signal based on the first notification signal, and outputs the first indication signal to the first scheduler. In this way, the first scheduler does not need to actively and periodically check whether the first indication signal is received, but passively receives the first indication signal from the first notification circuit. This can reduce occupation of the first scheduler, accelerate a scheduling speed, and further reduce time overheads.

In a possible implementation of the first aspect, the method further includes: After the first memory reader transmits the first data to the second chip, the first scheduler outputs a third trigger signal to the first notification circuit based on the first scheduling subtask; and the first notification circuit sends a second notification signal to the second chip based on the first notification subtask, and in response to the third trigger signal, where the second notification signal indicates the second chip to perform AI computing based on the first data. In the foregoing possible implementation, after the first memory reader transmits the first data to the second chip, the first scheduler outputs the third trigger signal to the first notification circuit, and schedules the first notification circuit to send the second notification signal to the second chip, so that the second chip learns that the first data has been transmitted to the second chip, and the second chip performs AI computing based on the first data. In this way, it can be ensured that the first chip and the second chip perform serial processing, to avoid a situation that the second chip cannot determine time for executing a third compute subtask (performing AI computing based on the first data).

In a possible implementation of the first aspect, the first chip further includes a first storage. That the first AI accelerator performs AI computing to obtain the first data based on the first compute subtask, and in response to the first trigger signal includes: The first AI accelerator performs AI computing to obtain the first data based on the first compute subtask, and in response to the first trigger signal, and writes the first data into first storage space of the first storage. That the first memory reader transmits the first data to the second chip based on the first transmission subtask, and in response to the second trigger signal includes: The first memory reader reads the first data from the first storage space based on the first transmission subtask, and in response to the second trigger signal, and transmits the first data to the second chip. In the foregoing possible implementation, both storage space from which the first AI accelerator outputs the first data and storage space accessed when the first memory reader obtains the first data are the first storage space of the first storage, and data copying does not need to be performed. This further reduces time overheads and lowers storage bandwidth requirements.

In a possible implementation of the first aspect, the plurality of tasks further include a second compute subtask, and the method further includes: After the first chip receives third data from the second chip, the first scheduler outputs a fourth trigger signal to the first AI accelerator based on the first scheduling subtask, where the third data is data obtained by the second chip by performing AI computing based on the first data; and the first AI accelerator performs AI computing based on the second compute subtask and the third data, and in response to the fourth trigger signal. In the foregoing possible implementation, the first chip may further receive the third data from the second chip, and the first scheduler outputs the fourth trigger signal to the first AI accelerator based on the first scheduling subtask, to schedule the first AI accelerator to perform AI computing based on the second compute subtask and the third data. In this way, the communication method provided in this embodiment of this application may be applied to a plurality of data exchange scenarios.

In a possible implementation of the first aspect, the first chip further includes the first processor, and the method further includes: The first processor outputs an execution sequence of the plurality of tasks to the first scheduler based on a request of a first application run by the first processor. In the foregoing possible implementation, the first processor needs to deliver only the execution sequence of the plurality of tasks executed by the first chip to the first scheduler. Because delivering the execution sequence of the plurality of tasks is not included within AI computing time and communication time, time at which the first processor delivers the execution sequence of the plurality of tasks does not affect the AI computing time and the communication time, and occupation of the first processor is low.

According to a second aspect, a communication method is provided. In the method, a plurality of tasks are executed based on a second chip, the plurality of tasks include a second scheduling subtask and a third compute subtask, and the second chip includes a second scheduler and a second AI accelerator; and the method includes: After the second chip receives first data from a first chip, the second scheduler outputs a fifth trigger signal to the second AI accelerator based on the second scheduling subtask; and the second AI accelerator performs AI computing based on the third compute subtask and the first data, and in response to the fifth trigger signal.

In the foregoing technical solution, in comparison with AI computing and data transmission processes scheduled by software run by a second processor, AI computing and data transmission processes in this embodiment of this application are scheduled by a hardware unit, namely, the second scheduler. The second scheduler may actively or passively learn whether the second chip receives the first data from the first chip, and then the second scheduler outputs the fifth trigger signal to the second AI accelerator based on the second scheduling subtask, enabling the second AI accelerator to execute the third compute subtask based on the first data. In response to the fifth trigger signal, the second AI accelerator starts to execute the third compute subtask, and performs AI computing based on the first data. The second AI accelerator can execute the third compute subtask only when the second scheduler confirms that the first data arrives. The second scheduler handles scheduling of inter-chip data transmission and intra-chip AI computing in a hardware manner, eliminating the need for processor-based software scheduling for inter-chip communication. Apart from AI computing overheads of the second AI accelerator, scheduling overheads and communication overheads of the second scheduler are low and negligible when compared with software scheduling latency. As a result, latency and jitter caused by scheduling and computation of the second processor can be eliminated, addressing the issue of significant time overhead.

In a possible implementation of the second aspect, that the second AI accelerator performs AI computing based on the third compute subtask and the first data, and in response to the fifth trigger signal includes: The second AI accelerator performs AI computing based on the third compute subtask and the first data, and in response to the fifth trigger signal, and outputs a second completion signal to the second scheduler, where the second completion signal indicates that AI computing performed based on the first data is completed. The method further includes: The second scheduler sends a third notification signal to the first chip based on the second scheduling subtask and the second completion signal, where the third notification signal indicates that the second chip has processed the first data. In the foregoing possible implementation, the second scheduler learns, based on the second completion signal from the second AI accelerator, that the second AI accelerator has completed AI computing based on the first data, and the second scheduler may send the third notification signal to the first chip, to indicate that the second chip has processed the first data, and the first chip may send data required for AI computing next time. In this way, the first chip and the second chip may cyclically perform data exchange and AI computing for a plurality of times, and it can be ensured that the first chip and the second chip perform serial processing, thereby preventing data overwriting that occurs because the first chip sends the data that needs to be processed next time to the second chip before the second chip completes processing the previously sent first data. In addition, when compared with periodical data transmission to the second chip, flexibly setting time for transmitting the data required for AI computing next time to the second chip based on the third notification signal can further reduce time overheads.

In a possible implementation of the second aspect, the second chip further includes a second notification circuit, and the plurality of tasks further include a second notification subtask. That the second scheduler sends the third notification signal to the first chip based on the second scheduling subtask and the second completion signal includes: The second scheduler outputs a sixth trigger signal to the second notification circuit based on the second scheduling subtask and the second completion signal; and the second notification circuit sends the third notification signal to the first chip based on the second notification subtask, and in response to the sixth trigger signal. In the foregoing possible implementation, the second chip further includes the second notification circuit, and the second scheduler outputs the sixth trigger signal to the second notification circuit, to schedule the second notification circuit to send the third notification signal to the first chip. In this way, the second scheduler does not need to write information carried in the third notification signal into the first chip, but only needs to output the sixth trigger signal to the second notification circuit in the second chip. Because an operation of outputting the sixth trigger signal is simple, occupation of the second scheduler can be reduced, a scheduling speed can be accelerated, and time overheads can be further reduced.

In a possible implementation of the second aspect, the method further includes: The second notification circuit receives a second notification signal from the first chip based on the second notification subtask, and outputs a second indication signal obtained based on the second notification signal to the second scheduler, where the second notification signal indicates the second chip to perform AI computing based on the first data, and the second indication signal indicates the second scheduler to output the fifth trigger signal to the second AI accelerator. In the foregoing possible implementation, the second notification circuit receives the second notification signal from the first chip based on the second notification subtask, obtains the second indication signal based on the second notification signal, and outputs the second indication signal to the second scheduler. In this way, the second chip may learn that the first data has been transmitted to the second chip to ensure that the first chip and the second chip perform serial processing, to avoid a situation that the second chip cannot determine time for executing the third compute subtask (performing AI computing based on the first data). In addition, the second scheduler does not need to actively and periodically check whether the second indication signal is received, but passively receives the second indication signal from the second notification circuit. This can reduce occupation of the second scheduler, accelerate a scheduling speed, and further reduce time overheads.

In a possible implementation of the second aspect, the second chip further includes a second storage, second storage space of the second memory is used to store the first data, and the second storage space is storage space for the second chip to perform memory registration (MR) for the first chip. That the second AI accelerator performs AI computing based on the third compute subtask and the first data, and in response to the fifth trigger signal includes: The second AI accelerator reads the first data from the second storage space based on the third compute subtask, and in response to the fifth trigger signal, and performs AI computing based on the first data. In the foregoing possible implementation, the second storage space of the second memory is the storage space for the second chip to perform memory registration (MR) for the first chip. Both storage space in which the first memory reader writes the first data into the second chip and storage space accessed when the second AI accelerator obtains the first data are the second storage space of the second memory, and data copying does not need to be performed. This further reduces time overheads and lowers storage bandwidth requirements.

In a possible implementation of the second aspect, the second chip further includes a second memory reader, and the plurality of tasks further include a second transmission subtask. The method further includes: After the second AI accelerator completes AI computing based on the first data, the second scheduler outputs a seventh trigger signal to the second memory reader based on the second scheduling subtask; and the second memory reader transmits third data to the first chip based on the second transmission subtask, and in response to the seventh trigger signal, where the third data is data obtained by the second AI accelerator by performing AI computing based on the first data. In the foregoing possible implementation, the second scheduler may further output the seventh trigger signal to the second memory reader based on the second scheduling subtask, to schedule the second memory reader to transmit the third data to the first chip based on the second transmission subtask. In this way, the communication method provided in this embodiment of this application may be applied to a plurality of data exchange scenarios.

In a possible implementation of the second aspect, the second chip further includes the second processor, and the method further includes: The second processor outputs an execution sequence of the plurality of tasks to the second scheduler based on a request of a second application run by the second processor. In the foregoing possible implementation, the second processor needs to deliver only the execution sequence of the plurality of tasks executed by the second chip to the second scheduler. Because delivering the execution sequence of the plurality of tasks is not included within AI computing time and communication time, time at which the second processor delivers the execution sequence of the plurality of tasks does not affect the AI computing time and the communication time, and occupation of the second processor is low.

According to a third aspect, a communication apparatus is provided. The apparatus is used in a first chip, the apparatus is configured to execute a plurality of tasks, the plurality of tasks include a first scheduling subtask, a first compute subtask, and a first transmission subtask, and the apparatus includes a first scheduler, a first AI accelerator, and a first memory reader. The first scheduler is configured to output a first trigger signal to the first AI accelerator based on the first scheduling subtask. The first AI accelerator is configured to: perform AI computing to obtain first data based on the first compute subtask, and in response to the first trigger signal, and output a first completion signal to the first scheduler, where the first data is data required by a second chip to perform AI computing, and the first completion signal indicates that the first compute subtask has been completed. The first scheduler is configured to output a second trigger signal to the first memory reader based on the first scheduling subtask and the first completion signal. The first memory reader is configured to transmit the first data to the second chip based on the first transmission subtask, and in response to the second trigger signal.

In a possible implementation of the third aspect, the first scheduler is specifically configured to output the second trigger signal to the first memory reader based on the first scheduling subtask and the first completion signal, and in response to a first indication signal, where the first indication signal indicates that the second chip has processed second data, and the second data is data obtained by the first AI accelerator by performing previous AI computing.

In a possible implementation of the third aspect, the apparatus further includes a first notification circuit, and the plurality of tasks further include a first notification subtask. The first notification circuit is configured to: receive a first notification signal from the second chip based on the first notification subtask, and output the first indication signal obtained based on the first notification signal to the first scheduler, where the first notification signal indicates that the second chip has processed the second data.

In a possible implementation of the third aspect, after the first memory reader transmits the first data to the second chip, the first scheduler is further configured to output a third trigger signal to the first notification circuit based on the first scheduling subtask.

The first notification circuit is further configured to send a second notification signal to the second chip based on the first notification subtask, and in response to the third trigger signal, where the second notification signal indicates the second chip to perform AI computing based on the first data.

In a possible implementation of the third aspect, the apparatus further includes a first storage. The first AI accelerator is specifically configured to: perform AI computing to obtain the first data based on the first compute subtask, and in response to the first trigger signal, and write the first data into first storage space of the first storage. The first memory reader is specifically configured to: read the first data from the first storage space based on the first transmission subtask, and in response to the second trigger signal, and transmit the first data to the second chip.

In a possible implementation of the third aspect, the plurality of tasks further include a second compute subtask. After the first chip receives third data from the second chip, the first scheduler is further configured to output a fourth trigger signal to the first AI accelerator based on the first scheduling subtask, where the third data is data obtained by the second chip by performing AI computing based on the first data. The first AI accelerator is further configured to perform AI computing based on the second compute subtask and the third data, and in response to the fourth trigger signal.

In a possible implementation of the third aspect, the first chip further includes a first processor. The first processor is configured to output an execution sequence of the plurality of tasks to the first scheduler based on a request of a first application run by the first processor.

According to a fourth aspect, a communication apparatus is provided. The apparatus is used in a second chip, the apparatus is configured to execute a plurality of tasks, the plurality of tasks include a second scheduling subtask and a third compute subtask, and the apparatus includes a second scheduler and a second AI accelerator. After the second chip receives first data from a first chip, the second scheduler is configured to output a fifth trigger signal to the second AI accelerator based on the second scheduling subtask. The second AI accelerator is configured to perform AI computing based on the third compute subtask and the first data, and in response to the fifth trigger signal.

In a possible implementation of the fourth aspect, the second AI accelerator is specifically configured to: perform AI computing based on the third compute subtask and the first data, and in response to the fifth trigger signal, and output a second completion signal to the second scheduler, where the second completion signal indicates that AI computing performed based on the first data is completed. The second scheduler is further configured to send a third notification signal to the first chip based on the second scheduling subtask and the second completion signal, where the third notification signal indicates that the second chip has processed the first data.

In a possible implementation of the fourth aspect, the second chip further includes a second notification circuit, and the plurality of tasks further include a second notification subtask. The second scheduler is specifically configured to output a sixth trigger signal to the second notification circuit based on the second scheduling subtask and the second completion signal. The second notification circuit is specifically configured to send the third notification signal to the first chip based on the second notification subtask, and in response to the sixth trigger signal.

In a possible implementation of the fourth aspect, the second notification circuit is further configured to: receive a second notification signal from the first chip based on the second notification subtask, and output a second indication signal obtained based on the second notification signal to the second scheduler, where the second notification signal indicates the second chip to perform AI computing based on the first data, and the second indication signal indicates the second scheduler to output the fifth trigger signal to the second AI accelerator.

In a possible implementation of the fourth aspect, the second chip further includes a second storage, second storage space of the second memory is used to store the first data, and the second storage space is storage space for the second chip to perform memory registration (MR) for the first chip. The second AI accelerator is specifically configured to: read the first data from the second storage space based on the third compute subtask, and in response to the fifth trigger signal, and perform AI computing based on the first data.

In a possible implementation of the fourth aspect, the second chip further includes a second memory reader, and the plurality of tasks further include a second transmission subtask. After the second AI accelerator completes AI computing based on the first data, the second scheduler is further configured to output a seventh trigger signal to the second memory reader based on the second scheduling subtask. The second memory reader is further configured to transmit third data to the first chip based on the second transmission subtask, and in response to the seventh trigger signal, where the third data is data obtained by the second AI accelerator by performing AI computing based on the first data.

In a possible implementation of the fourth aspect, the second chip further includes a second processor. The second processor is further configured to output an execution sequence of the plurality of tasks to the second scheduler based on a request of a second application run by the second processor.

According to a fifth aspect, a chip system is provided. The system includes a first chip and a second chip, the first chip includes the communication apparatus according to any one of the third aspect or the possible implementations of the third aspect, and the second chip includes the communication apparatus according to any one of the fourth aspect or the possible implementations of the fourth aspect.

According to a sixth aspect, an electronic device is provided. The electronic device includes an interface circuit and the chip system provided in the fifth aspect, and the interface circuit is coupled to the chip system.

It may be understood that any one of the communication apparatus, the chip system, and the electronic device described above may be configured to perform a corresponding method provided above. Therefore, for beneficial effects that can be achieved by any one of the communication apparatus, the chip system, and the electronic device, refer to beneficial effects of the corresponding method provided above. Details are not described herein again.

### BRIEF DESCRIPTION OF DRAWINGS

FIG. 1 is a diagram 1 of a structure of an electronic device according to an embodiment of this application;
FIG. 2 is a diagram 2 of a structure of an electronic device according to an embodiment of this application;
FIG. 3 is a schematic flowchart 1 of a communication method according to an embodiment of this application;
FIG. 4A and FIG. 4B are a schematic flowchart 2 of a communication method according to an embodiment of this application;
FIG. 5A and FIG. 5B are a schematic flowchart 3 of a communication method according to an embodiment of this application;
FIG. 6 is a diagram of a scheduling task according to an embodiment of this application;
FIG. 7A and FIG. 7B are a diagram of a control flow and a data flow of a first chip according to an embodiment of this application;
FIG. 8A and FIG. 8B are a diagram of a control flow and a data flow of a second chip according to an embodiment of this application;
FIG. 9 is a diagram 1 of a communication apparatus according to an embodiment of this application;
FIG. 10 is a diagram 2 of a communication apparatus according to an embodiment of this application;
FIG. 11 is a diagram of a chip system according to an embodiment of this application; and
FIG. 12 is a diagram 3 of a structure of an electronic device according to an embodiment of this application.

### DESCRIPTION OF EMBODIMENTS

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. "At least one of the following items (pieces)" or a similar expression thereof means any combination of these items, including a singular item (piece) or any combination of plural items (pieces). For example, at least one item (piece) of a, b, or c may represent a, b, c, a and b, a and c, b and c, or a, b, and c, where a, b, and c may be singular or plural. The character "/" generally indicates an "or" relationship between the associated objects. In addition, in embodiments of this application, terms such as "first" and "second" do not limit a quantity or an execution sequence.

In embodiments of this application, the word such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, numbers of steps are merely used to distinguish between different steps, and do not limit a sequence of the steps.

Before specific content of embodiments of this application is described, technical terms in embodiments of this application are first described.

Processor: The processor is a control center of a chip, connects various parts of the entire chip through various interfaces and lines, and performs various functions and processes data by running or executing a software program and/or a software module stored in a storage and invoking data stored in the storage. In some examples, the processor may be of a single-processor structure, of a multi-processor structure, a single-thread processor, a multi-thread processor, or the like. In some examples, the processor may include a central processing unit (central processing unit, CPU), a general-purpose processor, a microcontroller, a microprocessor, or the like. In addition, the processor may further include another hardware circuit or an accelerator, for example, an application-specific integrated circuit, a field-programmable gate array or another programmable logic device, a transistor logic device, a hardware component, or any combination thereof. The processor may implement or execute various example logical blocks, modules, and circuits described with reference to content in embodiments of this application. Alternatively, the processor may be a combination of processors implementing a computing function, for example, a combination of one or more microprocessors, or a combination of a digital signal processor and a microprocessor.

AI accelerator: The AI accelerator is a hardware unit that uses a logical language to implement an artificial intelligence (artificial intelligence, AI) computing function.

Hardware scheduler: The hardware scheduler is a hardware unit that executes a scheduling task.

The following describes an application scenario of embodiments of this application. Embodiments of this application are applicable to an electronic device, and the electronic device may be configured to perform artificial intelligence AI computing. The electronic device includes but is not limited to a mobile phone (mobile phone), a computer, a tablet computer, a notebook computer, a palmtop computer, a wearable device (for example, a smartwatch, a smart band, or a pedometer), an in-vehicle device (for example, a vehicle, a bicycle, an electric vehicle, an airplane, a ship, a train, or a high-speed railway), a virtual reality (virtual reality, VR) device, an augmented reality (augmented reality, AR) device, and a communication device (for example, a connector, a switch, or a router). For example, the electronic device is used in an intelligent driving scenario. The electronic device needs to perform a large amount of AI computing, to implement a perception function, a prediction function, and a planning and control function. In scenarios such as high-speed assisted driving and urban assisted driving, AI computational power needs to be increased to improve user experience. When computational power of a single chip is insufficient, a combination of a plurality of chips may be used to expand AI computational power.

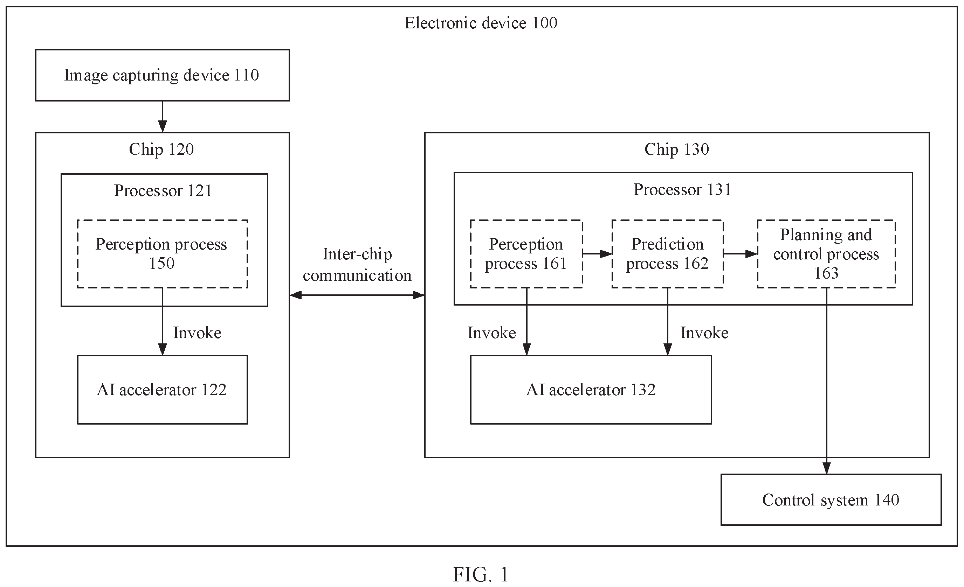

The following describes a structure of an electronic device 100 with reference to FIG. 1. For example, the electronic device 100 includes an image capturing device 110 (for example, a camera or a radar), a chip 120, a chip 130, and a control system 140. Both the chip 120 and the chip 130 may be coupled to the image capturing device 110, and the chip 120 and the chip 130 may be disposed on the control system 140. The image capturing device 110 may include a camera and/or a radar. The control system 140 may be configured to control a speed and direction of the electronic device 100. When the electronic device 100 is a vehicle, the control system 140 may be a vehicle chassis, may be configured to control a speed and direction of the vehicle, and may be further configured to house a battery or a motor. The chip 120 includes a processor 121 and an AI accelerator 122, and the chip 130 includes a processor 131 and an AI accelerator 132.

For example, a perception process 150 is run on the processor 121, and a perception process 161, a prediction process 162, and a planning and control process 163 are run on the processor 131. Both the perception process 150 and the perception process 161 are configured to implement a perception function, the prediction process 162 is configured to implement a prediction function, and the planning and control process 163 is configured to implement a planning and control function. The perception process 150 invokes the AI accelerator 122 to perform computing to obtain data A, and the chip 120 transmits the data A to the chip 130 in an inter-chip communication manner. The perception process 161 invokes the AI accelerator 132 to perform computing based on the data A to obtain data B, the prediction process 162 invokes the AI accelerator 132 to perform computing based on the data B to obtain data C, and the planning and control process 163 operates the control system 140 based on the data C.

A communication module with a built-in direct memory access (direct memory access, DMA) controller may be used between the chip 120 and the chip 130 to perform inter-chip communication. The communication module may be a hardware unit, for example, a peripheral component interconnect express (peripheral component interconnect express, PCIe) device or a network port. The PCIe device is used as an example for description. PCIe is a high-speed serial computer expansion bus standard, and may provide point-to-point interconnection between a PCIe root complex (root complex, RC) device and a terminal device (end point, EP) or connection between one RC and a plurality of EPs. The PCIe device features a high data transmission rate and low transmission latency. For example, a bandwidth of a single transmission channel of the PCIe device may reach 8 Gbps. The PCIe device may adopt a DMA technology to reduce occupation of a processor during data transmission. The DMA controller may control data transmission between the RC and the EP without participation of the processor.

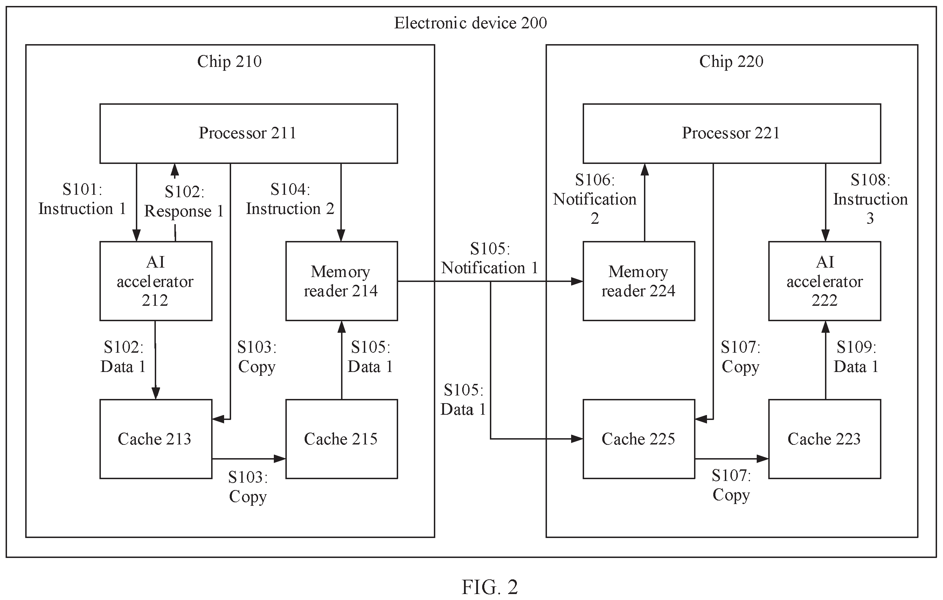

The following describes, with reference to FIG. 2, a process in which an electronic device 200 performs computing. The electronic device 200 includes a chip 210 and a chip 220. The chip 210 includes a processor 211, an AI accelerator 212, a cache 213, a memory reader 214, and a cache 215. The memory reader 214 may be a communication module with a built-in DMA controller. Both the cache 213 and the cache 215 are storage space in a memory of the chip 210. The cache 213 is storage space accessible by the AI accelerator 212, and the AI accelerator 212 may write data obtained by performing AI computing into the cache 213. The cache 215 is storage space accessible by the memory reader 214, and the memory reader 214 may read data from the cache 215. The chip 220 includes a processor 221, an AI accelerator 222, a cache 223, a memory reader 224, and a cache 225. The memory reader 224 may be a communication module with a built-in DMA controller. Both the cache 223 and the cache 225 are storage space in a memory of the chip 220. The cache 223 is storage space accessible by the AI accelerator 222, and the AI accelerator 222 may read data from the cache 223 to perform AI computing. The cache 225 is storage space for the chip 220 to perform registration for the chip 210, and the memory reader 214 may write data into the cache 225. The process in which the electronic device 200 performs computing may include the following steps.

S101: The processor 211 sends an instruction 1 to the AI accelerator 212, where the instruction 1 instructs the AI accelerator 212 to perform AI computing, and the processor 211 switches from user mode to kernel mode to drive the AI accelerator 212 to perform AI computing.

S102: The AI accelerator 212 performs AI computing according to the instruction 1 to obtain data 1, writes the data 1 into the cache 213, and sends a response 1 to the processor 211, where the response 1 indicates that AI computing has been completed, and the AI accelerator 212 notifies a driver of the AI accelerator 212 via a hardware interrupt. After performing interrupt processing, the driver of the AI accelerator 212 sends the response 1 to a process A run on the processor 211, to indicate that AI computing is completed; and the processor 211 switches from kernel mode to user mode based on the response 1.

S103: The processor 211 copies the data 1 in the cache 213 to the cache 215 based on the response 1.

S104: The processor 211 sends an instruction 2 to the memory reader 214, where the instruction 2 instructs to transmit the data 1 to the chip 220; and the processor 211 switches from user mode to kernel mode, and the process A run on the processor 211 invokes an interface of the memory reader 214 to perform memory reading and data transmission operations.

S105: The memory reader 214 reads the data 1 from the cache 215 according to the instruction 2, writes the data 1 into the cache 225 in the chip 220, and sends a notification 1 to the memory reader 224 in the chip 220, where the notification 1 indicates that transmission of the data 1 is completed.

S106: When receiving the notification 1, the memory reader 224 outputs a notification 2 obtained based on the notification 1 to the processor 221, where the memory reader 224 receives the notification 1, and notifies a driver of the memory reader 224 via a hardware interrupt. After performing interrupt processing, the driver of the memory reader 224 sends the notification 2 to a process A run on the processor 221 to indicate that transmission of the data 1 is completed, and the processor 221 switches from kernel mode to user mode based on the notification 2.

S107: The processor 221 copies the data 1 in the cache 225 to the cache 223 based on the notification 2.

S108: The processor 221 sends a data instruction 3 to the AI accelerator 222, where the instruction 3 instructs to perform AI computing based on the data 1, and the processor 221 switches from user mode to kernel mode to drive the AI accelerator 222 to perform AI computing.

S109: The AI accelerator 222 reads the data 1 from the cache 223 according to the instruction 3, and performs AI computing based on the data 1.

The process in which the electronic device 200 performs AI computing has the following problems: Firstly, within the chip 210, the cache 213 accessible by the AI accelerator 212 is different from the cache 215 accessible by the memory reader 214. Therefore, from outputting the data 1 by the AI accelerator 212 to reading the data 1 by the memory reader 214, the data 1 needs to be copied from the cache 213 to the cache 215. This operation occupies the processor 211 and introduces additional latency. Secondly, within the chip 220, the cache 223 accessible by the AI accelerator 222 is different from the cache 225 accessible by the memory reader 224. Therefore, from writing the data 1 into the cache 225 to reading the data 1 by the AI accelerator 222, the data 1 needs to be copied from the cache 225 to the cache 223. This operation occupies the processor 221 and introduces additional latency. Thirdly, both the AI accelerator and the memory reader are hardware devices. Therefore, corresponding operations need to be performed under scheduling of the processor. This operation increases scheduling overheads and introduces additional latency.

Specifically, S101 involves overheads for one switch from user mode to kernel mode; S102 involves overheads for one interrupt scheduling, one interrupt handling, and one switch from kernel mode to user mode; S103 involves overheads for one memory copy operation; S104 requires overheads for one switch from user mode to kernel mode; S106 involves overheads for one interrupt scheduling, one interrupt handling, one switch from kernel mode to user mode; S107 involves overheads for one memory copy operation; and S108 involves overheads for one switch from user mode to kernel mode. All these steps require participation of the processor, thereby increasing latency of the processor is increased. In particular, interrupt scheduling and switching between user mode and kernel mode depend on scheduling of an operating system. When the processor is busy, this can lead to uncontrollable latency jitter, and jitter duration may exceed the execution time taken of AI computing. Therefore, time overheads are large.

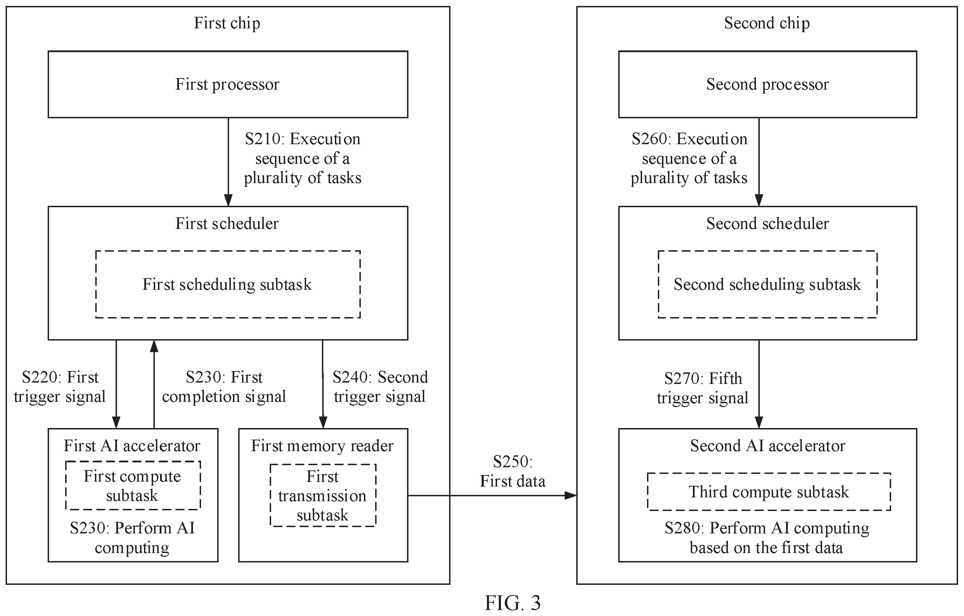

A communication method provided in embodiments of this application may be applied to resolve the problem of large time overheads. FIG. 3 is a possible schematic flowchart of a communication method according to an embodiment of this application. In the communication method shown in FIG. 3, a plurality of tasks are executed based on a first chip, and a plurality of tasks are executed based on a second chip. The plurality of tasks executed by the first chip include a first scheduling subtask, a first compute subtask, and a first transmission subtask. The plurality of tasks executed by the second chip include a second scheduling subtask and a third compute subtask. The first chip may be coupled to the second chip. The first chip includes a first processor, a first scheduler, a first AI accelerator, and a first memory reader. The second chip includes a second processor, a second scheduler, and a second AI accelerator.

Both the first chip and the second chip may be systems on chip (systems on chip, SoCs). The first AI accelerator, the second AI accelerator, the first scheduler, and the second scheduler may all be hardware units. Both the first AI accelerator and the second AI accelerator may be independent acceleration compute units, and can efficiently execute AI computing tasks. The first memory reader may be a communication module with a built-in DMA controller. The communication module may be a hardware unit, for example, a PCIe device or a network port. The communication module may implement a DMA technology, without participation of a processor during data transmission.

The communication method provided in embodiments of this application may include the following steps.

S210: The first processor outputs, to the first scheduler based on a request of a first application run by the first processor, an execution sequence of the plurality of tasks executed by the first chip.

S220: The first scheduler outputs a first trigger signal to the first AI accelerator based on the first scheduling subtask.

S230: The first AI accelerator performs AI computing to obtain first data based on the first compute subtask, and in response to the first trigger signal, and outputs a first completion signal to the first scheduler, where the first data is data required by the second chip to perform AI computing, and the first completion signal indicates that the first compute subtask has been completed.

S240: The first scheduler outputs a second trigger signal to the first memory reader based on the first scheduling subtask and the first completion signal.

S250: The first memory reader transmits the first data to the second chip based on the first transmission subtask, and in response to the second trigger signal.

In some embodiments, an execution sequence of each of the plurality of tasks executed by the first chip is fixed, to complete fixed AI computing and inter-chip communication functions. The request of the first application may indicate the first processor to control various hardware units to perform the fixed AI computing and inter-chip communication functions.

In some other embodiments, the execution sequence of each of the plurality of tasks executed by the first chip is customized by a user/the first application, to perform the corresponding AI computing and inter-chip communication functions according to a requirement of the user/the first application. The request of the first application may be used to generate the execution sequence of each task, and indicate the various hardware units of the first processor to execute each task according to the execution sequence of each task. Further, the execution sequence of each of the plurality of tasks executed by the first chip may be changed, for example, may be changed according to an update instruction sent by the first application.

For example, a structure between the plurality of tasks executed by the first chip may be at least one of a sequential structure, a branching structure, or a loop structure. The sequential structure indicates that the execution sequence of the plurality of tasks is from top to bottom or from left to right, with the tasks being executed in sequence. The branching structure indicates that tasks of different branches are selectively executed based on specified determining conditions. The branching structure may be classified into a single-branch structure, a dual-branch structure, or a multi-branch structure. The loop structure indicates that some or all tasks in the plurality of tasks are repeatedly executed. A structure between tasks may be one of the sequential structure, the branching structure, or the loop structure. Optionally, the structure between the plurality of tasks executed by the first chip may alternatively be another structure. This is not limited in embodiments of this application.

In the communication method provided in embodiments of this application, the first processor needs to deliver only the execution sequence of the plurality of tasks executed by the first chip to the first scheduler. Because delivering the execution sequence of the plurality of tasks is not included within AI computing time and communication time, time at which the first processor delivers the execution sequence of the plurality of tasks does not affect the AI computing time and the communication time, and occupation of the first processor is low.

In addition, in comparison with AI computing and data transmission processes scheduled by software run by the first processor, AI computing and data transmission processes in embodiments of this application are scheduled by the hardware unit, namely, the first scheduler. The first scheduler outputs the first trigger signal to the first AI accelerator based on the first scheduling subtask, enabling the first AI accelerator to execute the first compute subtask. In response to the first trigger signal, the first AI accelerator starts to execute the first compute subtask, performs AI computing to obtain the first data, and outputs the first completion signal to the first scheduler, so that the first scheduler learns that the first compute subtask has been completed. The first scheduler outputs the second trigger signal to the first memory reader based on the first scheduling subtask and the first completion signal, enabling the first memory reader to execute the first transmission subtask. In response to the second trigger signal, the first memory reader starts to execute the first transmission subtask and transmits the first data to the second chip. The first scheduler handles scheduling of intra-chip AI computing and inter-chip data transmission in a hardware manner, eliminating the need for processor-based software scheduling for inter-chip communication. In this implementation, all of the following overheads can be eliminated: overheads for one switch from user mode to kernel mode required in S101, overheads for one interrupt scheduling, one interrupt handling, and one switch from kernel mode to user mode that are required in S102, and overheads for one switch from user mode to kernel mode required in S104. Apart from AI computing overheads of the first AI accelerator and data transmission overheads of the first memory reader, scheduling overheads and communication overheads of the first scheduler are low and negligible when compared with software scheduling latency. As a result, latency and jitter caused by scheduling and computation of the first processor can be eliminated, addressing the issue of significant time overhead.

S260: The second processor outputs, to the second scheduler based on a request of a second application run by the second processor, an execution sequence of the plurality of tasks executed by the second chip.

S270: After the second chip receives the first data from the first chip, the second scheduler outputs a fifth trigger signal to the second AI accelerator based on the second scheduling subtask.

S280: The second AI accelerator performs AI computing based on the third compute subtask and the first data, and in response to the fifth trigger signal.

In some embodiments, an execution sequence of each of the plurality of tasks executed by the second chip is fixed, to complete fixed AI computing and inter-chip communication functions. The request of the second application may indicate the second processor to control various hardware units to perform the fixed AI computing and inter-chip communication functions.

In some other embodiments, the execution sequence of each of the plurality of tasks executed by the second chip is customized by the user/the second application, to perform the corresponding AI computing and inter-chip communication functions according to a requirement of the user/the second application. The request of the second application may be used to generate the execution sequence of each task, and indicate the various hardware units of the second processor to execute each task according to the execution sequence of each task. Further, the execution sequence of each of the plurality of tasks executed by the second chip may be changed, for example, may be changed according to an update instruction sent by the second application.

For example, a structure between the plurality of tasks executed by the second chip may be at least one of a sequential structure, a branching structure, or a loop structure. Optionally, the structure between the plurality of tasks executed by the second chip may alternatively be another structure. This is not limited in embodiments of this application.

In the communication method provided in embodiments of this application, the second processor needs to deliver only the execution sequence of the plurality of tasks executed by the second chip to the second scheduler. Because delivering the execution sequence of the plurality of tasks is not included within AI computing time and communication time, time at which the second processor delivers the execution sequence of the plurality of tasks does not affect the AI computing time and the communication time, and occupation of the second processor is low.

In addition, in comparison with AI computing and data transmission processes scheduled by software run by the second processor, AI computing and data transmission processes in embodiments of this application are scheduled by the hardware unit, namely, the second scheduler. The second scheduler may actively or passively learn whether the second chip receives the first data from the first chip, and then the second scheduler outputs the fifth trigger signal to the second AI accelerator based on the second scheduling subtask, enabling the second AI accelerator to execute the third compute subtask based on the first data. In response to the fifth trigger signal, the second AI accelerator starts to execute the third compute subtask, and performs AI computing based on the first data. The second AI accelerator can execute the third compute subtask only when the second scheduler confirms that the first data arrives. The second scheduler handles scheduling of inter-chip data transmission and intra-chip AI computing in a hardware manner, eliminating the need for processor-based software scheduling for inter-chip communication. In this implementation, overheads for one switch from user mode to kernel mode required in S108 can be eliminated. Apart from AI computing overheads of the second AI accelerator, scheduling overheads and communication overheads of the second scheduler are low and negligible when compared with software scheduling latency. As a result, latency and jitter caused by scheduling and computation of the second processor can be eliminated, addressing the issue of significant time overhead.

In a process in which a plurality of chips perform data transmission, a processor offloads a scheduling task to a hardware scheduler for execution. The foregoing describes a process in which a hardware scheduler schedules data transmission between chips. The following describes an implementation in which the hardware scheduler determines data transmission time by using an example.

In a possible implementation, S240 (that the first scheduler outputs the second trigger signal to the first memory reader based on the first scheduling subtask and the first completion signal) may include: The first scheduler outputs the second trigger signal to the first memory reader at a first time interval based on the first scheduling subtask. The first time interval is greater than duration during which the second chip performs AI computing each time. In this way, data is periodically transmitted to the second chip, so that it can be ensured that the first chip and the second chip perform serial processing, thereby preventing data overwriting that occurs because the first chip sends the first data that needs to be processed this time to the second chip before the second chip completes processing data that needs to be processed previously.

In another possible implementation, S240 (that the first scheduler outputs the second trigger signal to the first memory reader based on the first scheduling subtask and the first completion signal) may include: The first scheduler outputs the second trigger signal to the first memory reader based on the first scheduling subtask and the first completion signal, and in response to a first indication signal, where the first indication signal indicates that the second chip has processed second data, and the second data is data obtained by the first AI accelerator by performing previous AI computing.

The first scheduler may actively check whether the first indication signal is received. For example, the second chip may store, in a first register of the first chip, information (for example, 0) carried in the first indication signal. For example, the first register may be PCIe base address register (base address register, BAR) address mapping space. The first scheduler may periodically search for event data at a corresponding location of the first register. If the event data is 1, it indicates that the first scheduler has not received the first indication signal. If the event data is 0, it indicates that the first scheduler has received the first indication signal.

In the communication method provided in embodiments of this application, the first scheduler may learn, based on the first indication signal, that the second chip has processed the previously sent second data, and an accelerator of the second chip is in an idle state. In this case, the first scheduler may output the second trigger signal to the first memory reader, to schedule the first memory reader to transmit the first data to the second chip. In this way, it can be ensured that the first chip and the second chip perform serial processing, thereby preventing data overwriting that occurs because the first chip sends the first data that needs to be processed this time to the second chip before the second chip completes processing the previously sent second data. In addition, when compared with periodical data transmission to the second chip, flexibly setting time for transmitting the first data to the second chip based on the first indication signal can further reduce time overheads.

In this implementation, S280 (that the second AI accelerator performs AI computing based on the third compute subtask and the first data, and in response to the fifth trigger signal) may specifically include: The second AI accelerator performs AI computing based on the third compute subtask and the first data, and in response to the fifth trigger signal, and outputs a second completion signal to the second scheduler, where the second completion signal indicates that AI computing performed based on the first data is completed.

The method further includes S290: The second scheduler sends a third notification signal to the first chip based on the second scheduling subtask and the second completion signal, where the third notification signal indicates that the second chip has processed the first data.

In the communication method provided in embodiments of this application, the second scheduler learns, based on the second completion signal from the second AI accelerator, that the second AI accelerator has completed AI computing based on the first data, and the second scheduler may send the third notification signal to the first chip, to indicate that the second chip has processed the first data, and the first chip may send data required for AI computing next time. In this way, the first chip and the second chip may cyclically perform data exchange and AI computing for a plurality of times, and it can be ensured that the first chip and the second chip perform serial processing, thereby preventing data overwriting that occurs because the first chip sends the data that needs to be processed next time to the second chip before the second chip completes processing the previously sent first data. In addition, when compared with periodical data transmission to the second chip, flexibly setting time for transmitting the data required for AI computing next time to the second chip based on the third notification signal can further reduce time overheads.

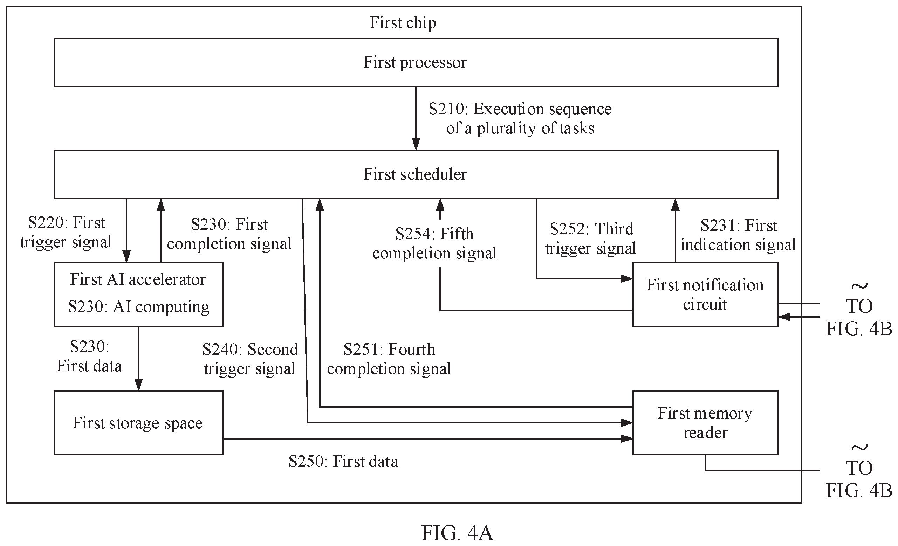

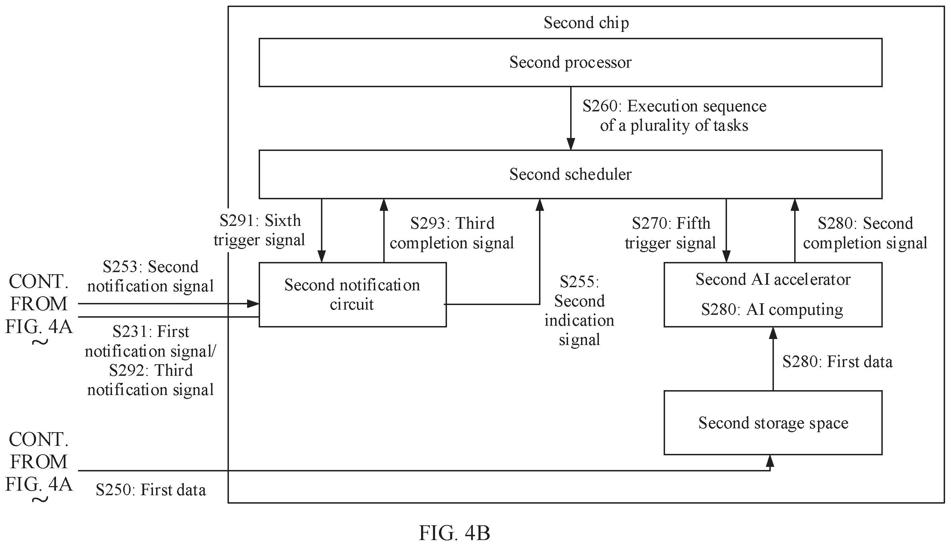

In some embodiments, with reference to FIG. 4A and FIG. 4B, the first chip further includes a first notification circuit, and the plurality of tasks further include a first notification subtask. The method further includes S231: The first notification circuit receives a first notification signal from the second chip based on the first notification subtask, and outputs the first indication signal obtained based on the first notification signal to the first scheduler, where the first notification signal indicates that the second chip has processed the second data.

The first scheduler may passively receive the first indication signal. For example, the second chip may store, in the first register of the first chip, information (for example, 0) carried in the first notification signal. The first notification circuit may periodically search for event data at a corresponding position of the first register. If the event data is 1, it indicates that the first notification circuit has not received the first notification signal. If the event data is 0, it indicates that the first notification circuit has received the first notification signal. After the first notification circuit receives the first notification signal, the event data in the first register is reset to 1 again. For example, the first notification circuit parses the first notification signal to obtain the first indication signal, and outputs the first indication signal to the first scheduler.

In the communication method provided in embodiments of this application, the first chip further includes the first notification circuit; and the first notification circuit receives the first notification signal from the second chip based on the first notification subtask, obtains the first indication signal based on the first notification signal, and outputs the first indication signal to the first scheduler. In this way, the first scheduler does not need to actively and periodically check whether the first indication signal is received, but passively receives the first indication signal from the first notification circuit. This can reduce occupation of the first scheduler, accelerate a scheduling speed, and further reduce time overheads.

In this embodiment, with reference to FIG. 4A and FIG. 4B, the second chip further includes a second notification circuit, and the plurality of tasks further include a second notification subtask.

S290 (That the second scheduler sends the third notification signal to the first chip based on the second scheduling subtask and the second completion signal) may specifically include the following steps.

S291: The second scheduler outputs a sixth trigger signal to the second notification circuit based on the second scheduling subtask and the second completion signal.

S292: The second notification circuit sends the third notification signal to the first chip based on the second notification subtask, and in response to the sixth trigger signal.

S293: The second notification circuit outputs a third completion signal to the second scheduler based on the second notification subtask, where the third completion signal indicates that the third notification signal has been sent to the first chip.

In the communication method provided in embodiments of this application, the second chip further includes the second notification circuit, and the second scheduler outputs the sixth trigger signal to the second notification circuit, to schedule the second notification circuit to send the third notification signal to the first chip. In this way, the second scheduler does not need to write information carried in the third notification signal into the first chip, but only needs to output the sixth trigger signal to the second notification circuit in the second chip. Because an operation of outputting the sixth trigger signal is simple, occupation of the second scheduler can be reduced, a scheduling speed can be accelerated, and time overheads can be further reduced.

In a possible implementation, with reference to FIG. 4A and FIG. 4B, after S250 (that the first memory reader transmits the first data to the second chip based on the first transmission subtask, and in response to the second trigger signal), the method may further include the following steps.

S251: The first memory reader sends a fourth completion signal to the first scheduler based on the first transmission subtask, where the fourth completion signal indicates that the first data has been transmitted to the second chip.

S252: After the first memory reader transmits the first data to the second chip, the first scheduler outputs a third trigger signal to the first notification circuit based on the first scheduling subtask.

S253: The first notification circuit sends a second notification signal to the second chip based on the first notification subtask, and in response to the third trigger signal, where the second notification signal indicates the second chip to perform AI computing based on the first data.

S254: The first notification circuit sends a fifth completion signal to the first scheduler based on the first notification subtask, where the fifth completion signal indicates that the second notification signal has been sent to the second chip.

In the communication method provided in embodiments of this application, after the first memory reader transmits the first data to the second chip, the first scheduler outputs the third trigger signal to the first notification circuit, and schedules the first notification circuit to send the second notification signal to the second chip, so that the second chip learns that the first data has been transmitted to the second chip, and the second chip performs AI computing based on the first data. In this way, it can be ensured that the first chip and the second chip perform serial processing, to avoid a situation that the second chip cannot determine time for executing the third compute subtask (performing AI computing based on the first data).

In this implementation, with reference to FIG. 4A and FIG. 4B, the method may further include S255: The second notification circuit receives the second notification signal from the first chip based on the second notification subtask, and outputs a second indication signal obtained based on the second notification signal to the second scheduler, where the second notification signal indicates the second chip to perform AI computing based on the first data, and the second indication signal indicates the second scheduler to output the fifth trigger signal to the second AI accelerator.

The second scheduler may passively receive the second indication signal. For example, the first chip may store, in a second register of the second chip, information (for example, 0) carried in the second notification signal. For example, the second register may be PCIe base address register (base address register, BAR) address mapping space. The second notification circuit may periodically search for event data at a corresponding location of the second register. If the event data is 1, it indicates that the second notification circuit has not received the second notification signal. If the event data is 0, it indicates that the second notification circuit has received the second notification signal. After the second notification circuit receives the second notification signal, the event data in the second register is reset to 1 again. For example, the second notification circuit parses the second notification signal to obtain the second indication signal, and outputs the second indication signal to the second scheduler.

In the communication method provided in embodiments of this application, the second notification circuit receives the second notification signal from the first chip based on the second notification subtask, obtains the second indication signal based on the second notification signal, and outputs the second indication signal to the second scheduler. In this way, the second chip may learn that the first data has been transmitted to the second chip to ensure that the first chip and the second chip perform serial processing, to avoid a situation that the second chip cannot determine time for executing the third compute subtask (performing AI computing based on the first data). In addition, the second scheduler does not need to actively and periodically check whether the second indication signal is received, but passively receives the second indication signal from the second notification circuit. This can reduce occupation of the second scheduler, accelerate a scheduling speed, and further reduce time overheads. In addition, overheads for one interrupt scheduling, one interrupt handling, and one switch from kernel mode to user mode that are required in S106 may be eliminated. As a result, latency and jitter caused by scheduling and computation of the second processor may be eliminated.

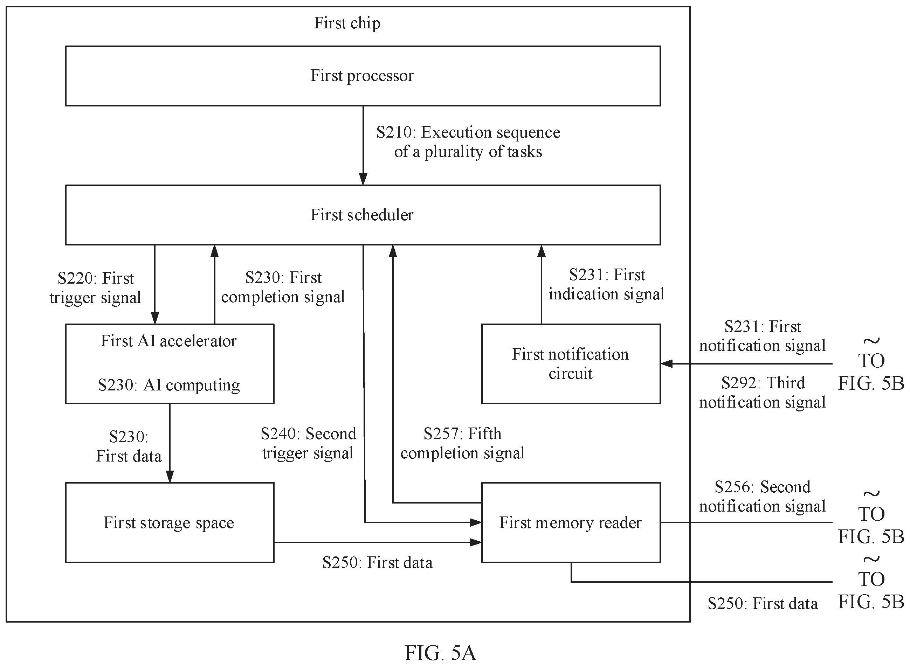

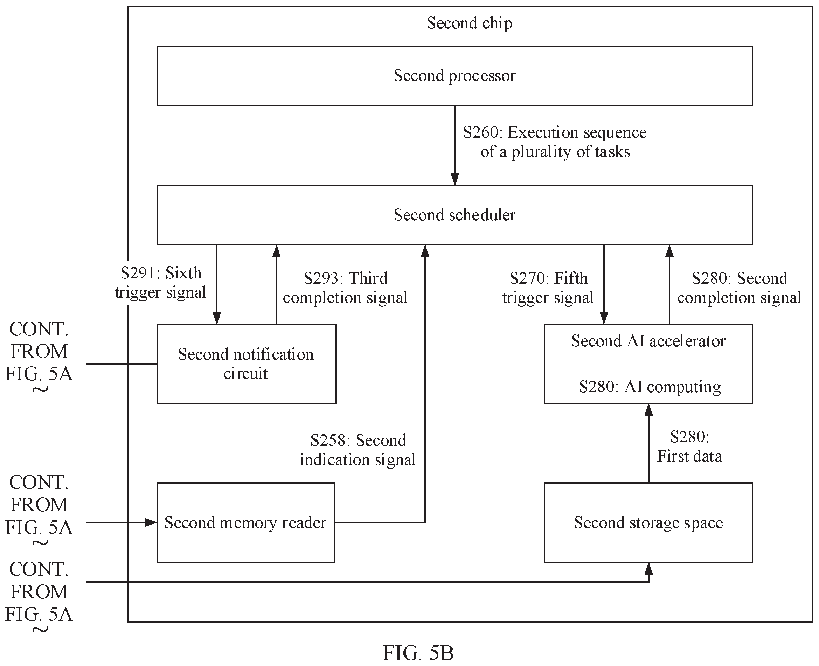

In another possible implementation, with reference to FIG. 5A and FIG. 5B, after S250 (that the first memory reader transmits the first data to the second chip based on the first transmission subtask, and in response to the second trigger signal), the method may further include the following steps.

S256: After transmitting the first data to the second chip, the first memory reader sends the second notification signal to the second chip based on the first transmission subtask, where the second notification signal indicates the second chip to perform AI computing based on the first data.

S257: The first memory reader sends the fifth completion signal to the first scheduler based on the first transmission subtask, where the fifth completion signal indicates that the second notification signal has been sent to the second chip.

In the communication method provided in embodiments of this application, the first transmission subtask may include sending the second notification signal to the second chip, and the second notification signal is sent by the first memory reader to the second chip. In comparison with a manner in which the second notification signal is sent by the first notification circuit to the second chip (for example, steps S251 to S254), in this implementation, a step in which the first scheduler learns that the first memory reader transmits the first data to the second chip can be eliminated, and a step in which the first scheduler sends the third trigger signal to the first notification circuit can be eliminated.

In this implementation, with reference to FIG. 5A and FIG. 5B, the second chip may further include a second memory reader. The method may further include S258: The second memory reader receives the second notification signal from the first chip based on the second transmission subtask, and outputs the second indication signal obtained based on the second notification signal to the second scheduler, where the second notification signal indicates the second chip to perform AI computing based on the first data, and the second indication signal indicates the second scheduler to output the fifth trigger signal to the second AI accelerator.

For example, the second memory reader may be a communication module with a built-in DMA controller. The communication module may be a hardware unit, for example, a PCIe device or a network port. The communication module may implement a DMA technology, without participation of a processor during data transmission.

In the communication method provided in embodiments of this application, the second transmission subtask may include receiving the second notification signal from the first chip, the second notification signal is received by the second memory reader, and the second indication signal is sent by the second memory reader to the second scheduler.

The foregoing describes possible implementations of data transmission and notification signal transmission between the first chip and the second chip. The following describes a data caching manner in the first chip and the second chip by using an example.

In a possible implementation, with reference to FIG. 4A, FIG. 4B, FIG. 5A, and FIG. 5B, the first chip further includes a first storage. S230 (That the first AI accelerator performs AI computing to obtain the first data based on the first compute subtask, and in response to the first trigger signal) may specifically include: The first AI accelerator performs AI computing to obtain the first data based on the first compute subtask, and in response to the first trigger signal, and writes the first data into first storage space of the first storage. S250 (That the first memory reader transmits the first data to the second chip based on the first transmission subtask, and in response to the second trigger signal) may specifically include: The first memory reader reads the first data from the first storage space based on the first transmission subtask, and in response to the second trigger signal, and transmits the first data to the second chip.

For example, the first storage may be a memory of the first chip, for example, a double rate synchronous dynamic random access memory (double data rate synchronous dynamic random access memory, DDR). The first storage space is memory space accessible by both the first AI accelerator and the first memory reader, and accessing includes reading and/or writing. Before delivering the plurality of tasks executed by the first chip, the first processor needs to apply for the first storage space in the memory in advance, for the first AI accelerator and the first memory reader to access.

In the communication method provided in embodiments of this application, both storage space from which the first AI accelerator outputs the first data and storage space accessed when the first memory reader obtains the first data are the first storage space of the first memory, and data copying does not need to be performed. In this way, overheads for one memory copy operation required in S103 can be eliminated, time overheads can be further reduced, and storage bandwidth requirements can be lowered.

In this implementation, with reference to FIG. 4A, FIG. 4B, FIG. 5A, and FIG. 5B, the second chip further includes a second storage, second storage space of the second storage is used to store the first data, and the second storage space is storage space for the second chip to perform memory registration (memory registration, MR) for the first chip.

S250 (That the first memory reader transmits the first data to the second chip based on the first transmission subtask, and in response to the second trigger signal) may specifically include: The first memory reader writes the first data into the second storage space of the second chip based on the first transmission subtask, and in response to the second trigger signal.

S280 (That the second AI accelerator performs AI computing based on the third compute subtask and the first data, and in response to the fifth trigger signal) may specifically include: The second AI accelerator reads the first data from the second storage space based on the third compute subtask, and in response to the fifth trigger signal, and performs AI computing based on the first data.

For example, the second storage may be a memory of the second chip, for example, (a DDR). The second storage space is memory space accessible by both the second AI accelerator and the second memory reader, and accessing includes reading and/or writing. Before delivering the plurality of tasks executed by the second chip, the second processor needs to apply for the second storage space in the memory in advance, for the second AI accelerator and the second memory reader to access.

In the communication method provided in embodiments of this application, the second storage space of the second memory is the storage space for the second chip to perform memory registration (MR) for the first chip. Both storage space in which the first memory reader writes the first data into the second chip and storage space accessed when the second AI accelerator obtains the first data are the second storage space of the second memory, and data copying does not need to be performed. In this way, overheads for one memory copy operation required in S107 can be eliminated, time overheads can be further reduced, and storage bandwidth requirements can be lowered.

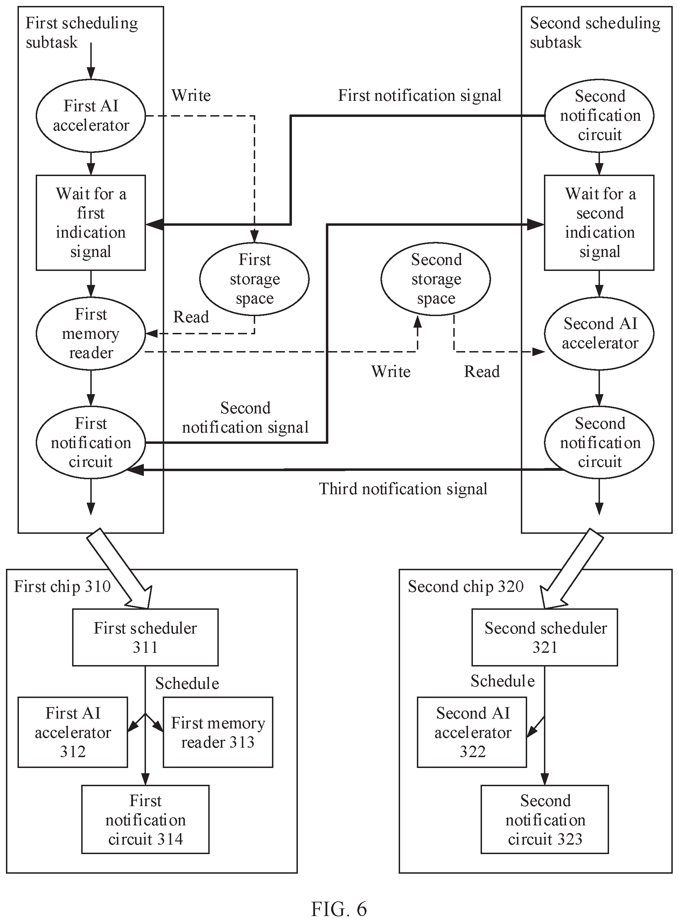

The following describes, with reference to FIG. 6, the first scheduling subtask and the second scheduling subtask from a perspective of transmitting data from a first chip 310 to a second chip 320. For example, the first chip 310 includes a first scheduler 311, a first AI accelerator 312, a first memory reader 313, and a first notification circuit 314, and the second chip 320 includes a second scheduler 321, a second AI accelerator 322, and a second notification circuit 323.

The first scheduling subtask includes information required for triggering each hardware unit to execute a corresponding task, for example, an input/output address of the first AI accelerator, input/output information of the first memory reader, event data, address information, and the like required by the first notification circuit, and an execution sequence of each subtask.

The first scheduling subtask may specifically include the following: The first scheduler 311 schedules the first AI accelerator 312 to perform AI computing to obtain the first data, and write the first data into the first storage space. When the first indication signal obtained based on the first notification signal is not received, the first scheduler 311 waits. When the first indication signal is received, the first scheduler 311 schedules the first memory reader 313 to read the first data from the first storage space, and write the first data into the second storage space of the second chip 320. Then, the first scheduler 311 schedules the first notification circuit 314 to send the second notification signal to the second chip 320.

The second scheduling subtask includes information required for triggering each hardware unit to execute a corresponding task, for example, an input/output address of the second AI accelerator, event data, address information, and the like required by the second notification circuit, and an execution sequence of each subtask.

The second scheduling subtask may specifically include the following: After previous AI computing is performed, the second scheduler 321 schedules the second notification circuit 323 to send the first notification signal to the first chip 310, so that the first scheduler 311 receives the first indication signal obtained based on the first notification signal. When the second indication signal obtained based on the second notification signal is not received, the second scheduler 321 waits. When the second indication signal is received, the second scheduler 321 schedules the second AI accelerator 322 to read the first data from the second storage space, and perform AI computing based on the first data. After AI computing performed based on the first data is completed, the second scheduler 321 schedules the second notification circuit 323 to send the third notification signal to the first chip 310.

For example, when the first chip performs AI computing for a first time, the first scheduler may directly schedule the first memory reader to perform data transmission without waiting for an indication signal. When the second chip performs AI computing for a first time, the second scheduler needs to wait for an indication signal, so that the second AI accelerator can be scheduled to perform AI computing based on the second data.

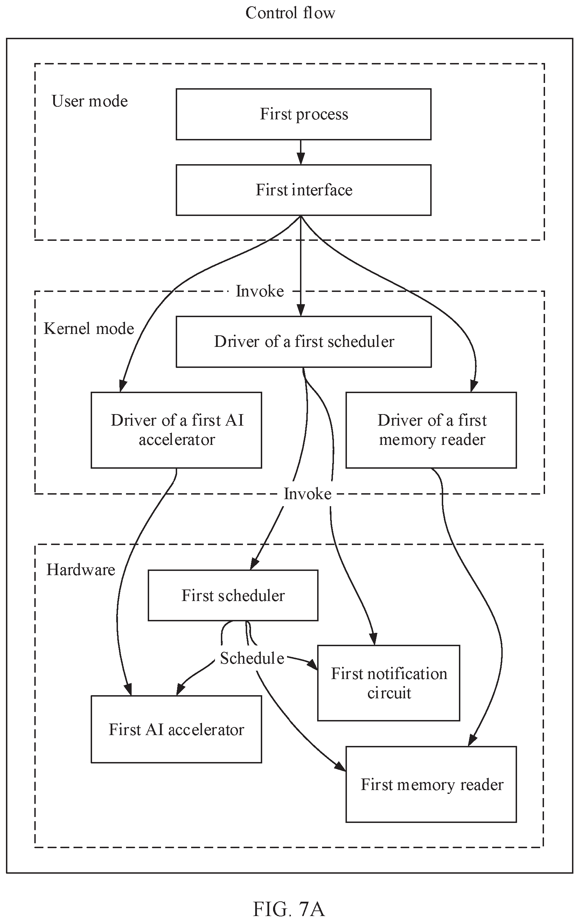

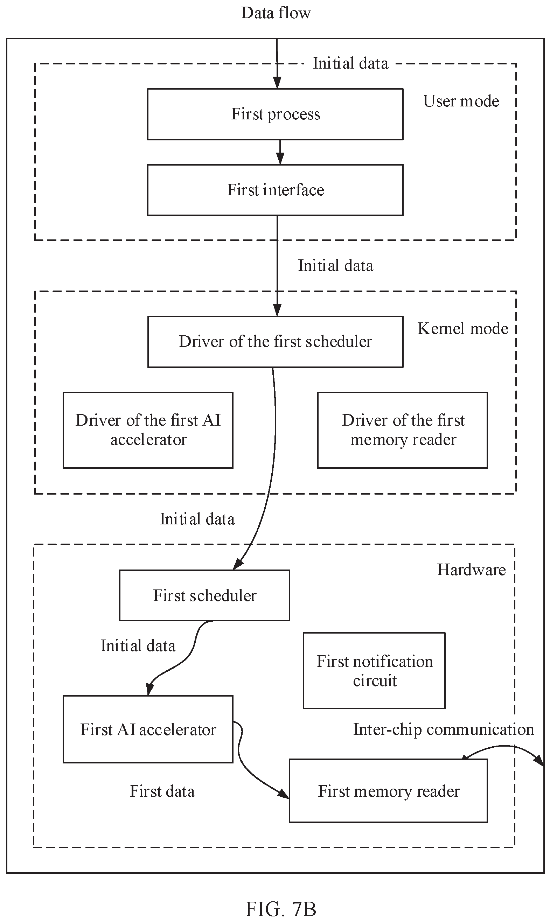

In a possible implementation, with reference to FIG. 7A and FIG. 7B, an operating system of the first chip includes user mode and kernel mode. The operating system of the first chip may control hardware to execute a plurality of tasks. User mode of the first chip includes a first process and a first interface. Kernel mode of the first chip includes a driver of the first scheduler, a driver of the first AI accelerator, and a driver of the first memory reader. The hardware of the first chip includes the first scheduler, the first AI accelerator, the first notification circuit, and the first memory reader. The plurality of tasks executed by the first chip may include a first scheduling task, a first compute task, a first transmission task, and a first notification task.

A control flow of the first chip may include the following: The first process run by the first processor may, through the first interface, invoke the driver of the first scheduler to deliver the first scheduling task to the first scheduler, deliver the first notification task to the first notification circuit, invoke the driver of the first AI accelerator to deliver the first compute task to the first AI accelerator, and invoke the driver of the first memory reader to deliver the first transmission task to the first memory reader. Based on the first scheduling task, the first scheduler schedules the first AI accelerator to execute the first compute task, schedules the first notification circuit to execute the first notification task, and schedules the first memory reader to execute the first transmission task. Each task may include a plurality of subtasks. For example, the first compute task includes a plurality of compute subtasks; and each time AI computing is performed, it is considered that one compute subtask is executed.

Transmitting the first data is used as an example. A data flow of the first chip may include the following: The first process obtains initial data, and sends the initial data to the driver of the first scheduler through the first interface, to send the initial data to the first scheduler. The first scheduler sends the initial data to the first AI accelerator to execute the first compute subtask (performing AI computing based on the initial data) to obtain the first data. The first memory reader obtains the first data, and transmits the first data to the second chip through inter-chip communication.

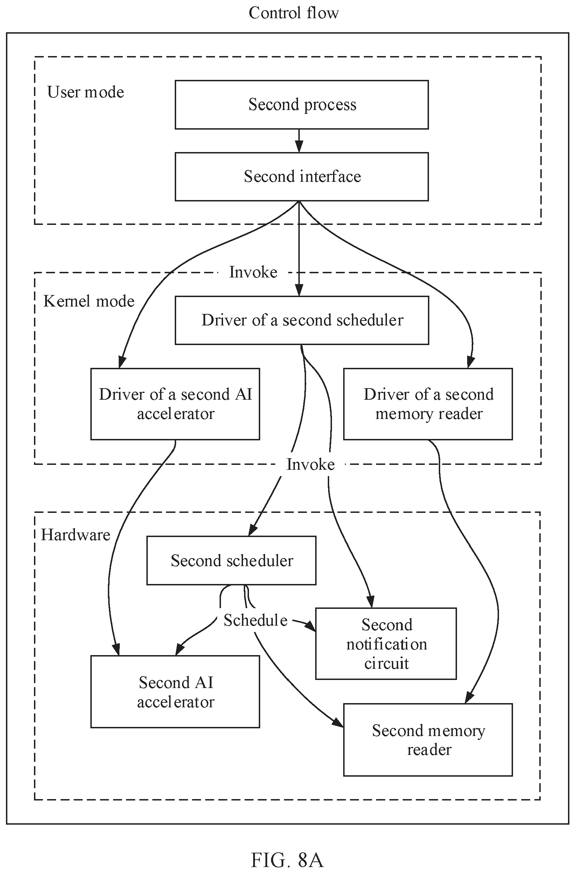

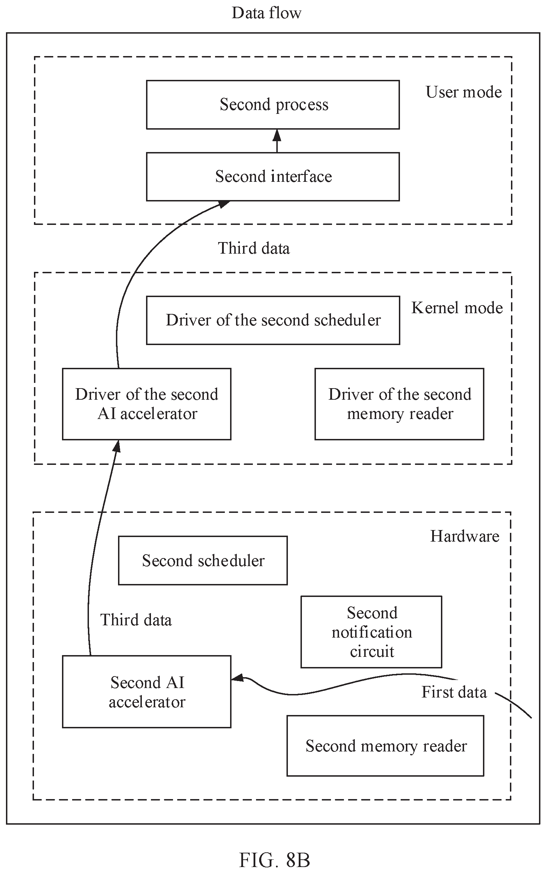

In another possible implementation, with reference to FIG. 8A and FIG. 8B, an operating system of the second chip includes user mode and kernel mode. The operating system of the second chip may control hardware to execute a plurality of tasks. User mode of the second chip includes a second process and a second interface. Kernel mode of the second chip includes a driver of the second scheduler, a driver of the second AI accelerator, and a driver of the second memory reader. The hardware of the second chip includes the second scheduler, the second AI accelerator, the second notification circuit, and the second memory reader. The plurality of tasks executed by the second chip may include a second scheduling task, a second compute task, a second transmission task, and a second notification task.

A control flow of the second chip may include the following: The second process run by the second processor may invoke, through the second interface, the driver of the second scheduler to deliver the second scheduling task to the second scheduler, deliver the second notification task to the second notification circuit, invoke the driver of the second AI accelerator to deliver the second compute task to the second AI accelerator, and invoke the driver of the second memory reader to deliver the second transmission task to the second memory reader. Based on the second scheduling task, the second scheduler schedules the second AI accelerator to execute the second compute task, schedules the second notification circuit to execute the second notification task, and schedules the second memory reader to execute the second transmission task. Each task may include a plurality of subtasks. For example, the second compute task includes a plurality of compute subtasks; and each time AI computing is performed, it is considered that one compute subtask is executed.

Transmitting the first data is used as an example. A data flow of the second chip may include the following: The second AI accelerator obtains the first data through inter-chip communication, and the second AI accelerator executes the third compute subtask (performing AI computing based on the first data) to obtain third data. The second AI accelerator sends the third data to the driver of the second AI accelerator, and then sends the third data to the second process through a second interface.

The foregoing describes data transmission from the first chip to the second chip, and the following describes data transmission from the second chip to the first chip.

In a possible implementation, the plurality of tasks executed by the first chip further include a second compute subtask, and the method further includes: After the first chip receives the third data from the second chip, the first scheduler outputs a fourth trigger signal to the first AI accelerator based on the first scheduling subtask, where the third data is data obtained by the second chip by performing AI computing based on the first data; and the first AI accelerator performs AI computing based on the second compute subtask and the third data, and in response to the fourth trigger signal.

In the communication method provided in embodiments of this application, the first chip may further receive the third data from the second chip, and the first scheduler outputs the fourth trigger signal to the first AI accelerator based on the first scheduling subtask, to schedule the first AI accelerator to perform AI computing based on the second compute subtask and the third data. In this way, the communication method provided in embodiments of this application may be applied to a plurality of data exchange scenarios.

In this implementation, the second chip further includes the second memory reader, and the plurality of tasks further include the second transmission subtask. The method further includes: After the second AI accelerator completes AI computing based on the first data, the second scheduler outputs a seventh trigger signal to the second memory reader based on the second scheduling subtask; and the second memory reader transmits third data to the first chip based on the second transmission subtask, and in response to the seventh trigger signal, where the third data is data obtained by the second AI accelerator by performing AI computing based on the first data.

In the communication method provided in embodiments of this application, the second scheduler may further output the seventh trigger signal to the second memory reader based on the second scheduling subtask, to schedule the second memory reader to transmit the third data to the first chip based on the second transmission subtask. In this way, the communication method provided in embodiments of this application may be applied to a plurality of data exchange scenarios.

In a possible implementation, the communication method provided in embodiments of this application may be applied to a plurality of chips to cooperatively complete subtasks, and this is not limited to a case in which two chips cooperatively complete subtasks.

In a low-cost intelligent driving system solution, capabilities of hardware such as a processor and an AI accelerator of a single chip are usually insufficient. Therefore, two or even more chips are required to form different solutions with low costs, medium costs, or high costs, to support different intelligent driving experience. Communication efficiency between chips is very important. Currently, communication between chips is generally performed by using a PCIe device. The PCIe device features a large bandwidth and low latency, and can provide a high-performance communication means. However, in an end-to-end communication link from a sender to a receiver, data copying and communication scheduling usually become a communication bottleneck, resulting in a sharp decrease in end-to-end communication performance. In the present invention, end-to-end high-performance communication is implemented by using a hardware scheduler, an intra-chip data copy-free means, and the like, and communication scheduling latency can be reduced to below 1 µs.

The foregoing mainly describes the communication method and the first chip and the second chip to which the communication method is applied. It may be understood that, to implement the foregoing functions, the first chip and the second chip include corresponding hardware structures and/or software modules for performing the functions. A person skilled in the art should easily be aware that, in combination with structures and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, a corresponding communication apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that module division in embodiments of this application is an example, and is merely logical function division. There may be another division manner during actual implementation.

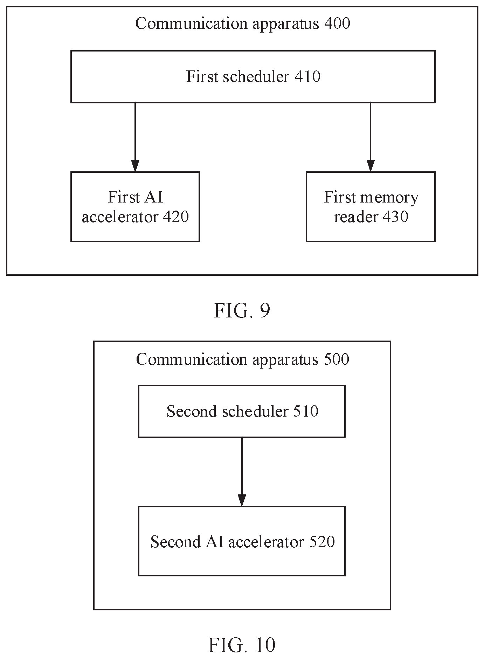

When division into the modules is performed from a perspective of hardware, FIG. 9 is a diagram of a possible structure of a communication apparatus 400 in the foregoing embodiments. The communication apparatus 400 is used in a first chip. The communication apparatus 400 is configured to execute a plurality of tasks. The plurality of tasks include a first scheduling subtask, a first compute subtask, and a first transmission subtask. The communication apparatus 400 includes a first scheduler 410, a first AI accelerator 420, and a first memory reader 430. The first scheduler 410 is configured to output a first trigger signal to the first AI accelerator 420 based on the first scheduling subtask. The first AI accelerator 420 is configured to: perform AI computing to obtain first data based on the first compute subtask, and in response to the first trigger signal, and output a first completion signal to the first scheduler 410, where the first data is data required by a second chip to perform AI computing, and the first completion signal indicates that the first compute subtask has been completed. The first scheduler 410 is configured to output a second trigger signal to the first memory reader 430 based on the first scheduling subtask and the first completion signal. The first memory reader 430 is configured to transmit the first data to the second chip based on the first transmission subtask, and in response to the second trigger signal.

In a possible implementation, the first scheduler 410 is specifically configured to output the second trigger signal to the first memory reader 430 based on the first scheduling subtask and the first completion signal, and in response to a first indication signal, where the first indication signal indicates that the second chip has processed second data, and the second data is data obtained by the first AI accelerator 420 by performing previous AI computing.

In a possible implementation, the communication apparatus 400 further includes a first notification circuit, and the plurality of tasks further include a first notification subtask. The first notification circuit is configured to: receive a first notification signal from the second chip based on the first notification subtask, and output the first indication signal obtained based on the first notification signal to the first scheduler 410, where the first notification signal indicates that the second chip has processed the second data.

In a possible implementation, after the first memory reader 430 transmits the first data to the second chip, the first scheduler 410 is further configured to output a third trigger signal to the first notification circuit based on the first scheduling subtask. The first notification circuit is further configured to send a second notification signal to the second chip based on the first notification subtask, and in response to the third trigger signal, where the second notification signal indicates the second chip to perform AI computing based on the first data.

In a possible implementation, the communication apparatus 400 further includes a first storage. The first AI accelerator 420 is specifically configured to: perform AI computing to obtain the first data based on the first compute subtask, and in response to the first trigger signal, and write the first data into first storage space of the first storage. The first memory reader 430 is specifically configured to: read the first data from the first storage space based on the first transmission subtask, and in response to the second trigger signal, and transmit the first data to the second chip.

In a possible implementation, the plurality of tasks further include a second compute subtask. After the first chip receives third data from the second chip, the first scheduler 410 is further configured to output a fourth trigger signal to the first AI accelerator 420 based on the first scheduling subtask, where the third data is data obtained by the second chip by performing AI computing based on the first data. The first AI accelerator 420 is further configured to perform AI computing based on the second compute subtask and the third data, and in response to the fourth trigger signal.

In a possible implementation, the first chip further includes a first processor. The first processor is configured to output an execution sequence of the plurality of tasks to the first scheduler 410 based on a request of a first application run by the first processor.

Components of the communication apparatus 400 provided in this embodiment of this application are respectively configured to implement functions of the steps of the corresponding communication method. Because the steps have been described in detail in the foregoing communication method embodiments, details are not described herein again.

FIG. 10 is a diagram of another possible structure of a communication apparatus 500 in the foregoing embodiments. The communication apparatus 500 is used in a second chip. The communication apparatus 500 is configured to execute a plurality of tasks. The plurality of tasks include a second scheduling subtask and a third compute subtask. The communication apparatus 500 includes a second scheduler 510 and a second AI accelerator 520. After the second chip receives first data from a first chip, the second scheduler 510 is configured to output a fifth trigger signal to the second AI accelerator 520 based on the second scheduling subtask. The second AI accelerator 520 is configured to perform AI computing based on the third compute subtask and the first data, and in response to the fifth trigger signal.

In a possible implementation, the second AI accelerator 520 is specifically configured to: perform AI computing based on the third compute subtask and the first data, and in response to the fifth trigger signal, and output a second completion signal to the second scheduler 510, where the second completion signal indicates that AI computing performed based on the first data is completed. The second scheduler 510 is further configured to send a third notification signal to the first chip based on the second scheduling subtask and the second completion signal, where the third notification signal indicates that the second chip has processed the first data.

In a possible implementation, the second chip further includes a second notification circuit, and the plurality of tasks further include a second notification subtask.

The second scheduler 510 is specifically configured to output a sixth trigger signal to the second notification circuit based on the second scheduling subtask and the second completion signal. The second notification circuit is specifically configured to send the third notification signal to the first chip based on the second notification subtask, and in response to the sixth trigger signal.

In a possible implementation, the second notification circuit is further configured to: receive a second notification signal from the first chip based on the second notification subtask, and output a second indication signal obtained based on the second notification signal to the second scheduler 510, where the second notification signal indicates the second chip to perform AI computing based on the first data, and the second indication signal indicates the second scheduler 510 to output the fifth trigger signal to the second AI accelerator 520.

In a possible implementation, the second chip further includes a second storage, second storage space of the second memory is used to store the first data, and the second storage space is storage space for the second chip to perform memory registration (MR) for the first chip. The second AI accelerator 520 is specifically configured to: read the first data from the second storage space based on the third compute subtask, and in response to the fifth trigger signal, and perform AI computing based on the first data.

In a possible implementation, the second chip further includes a second memory reader, and the plurality of tasks further include a second transmission subtask. After the second AI accelerator 520 completes AI computing based on the first data, the second scheduler 510 is further configured to output a seventh trigger signal to the second memory reader based on the second scheduling subtask. The second memory reader is further configured to transmit third data to the first chip based on the second transmission subtask, and in response to the seventh trigger signal, where the third data is data obtained by the second AI accelerator 520 by performing AI computing based on the first data.

In a possible implementation, the second chip further includes a second processor. The second processor is further configured to output an execution sequence of the plurality of tasks to the second scheduler 510 based on a request of a second application run by the second processor.

Components of the communication apparatus 500 provided in this embodiment of this application are respectively configured to implement functions of the steps of the corresponding communication method. Because the steps have been described in detail in the foregoing communication method embodiments, details are not described herein again.

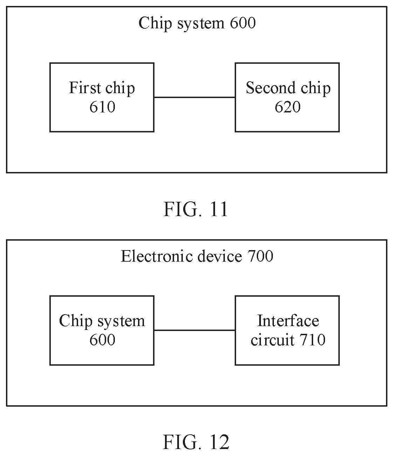

An embodiment of this application further provides a chip system. With reference to FIG. 11, the chip system 600 includes a first chip 610 and a second chip 620. The first chip 610 may include the communication apparatus 400 shown in FIG. 9, and the second chip 620 may include the communication apparatus 500 shown in FIG. 10. Components of the chip system 600 provided in this embodiment of this application are respectively configured to implement functions of the steps of the corresponding communication method. Because the steps have been described in detail in the foregoing communication method embodiments, details are not described herein again.

An embodiment of this application further provides an electronic device. With reference to FIG. 12, the electronic device 700 includes an interface circuit 710 and the chip system 600 shown in FIG. 11. The interface circuit 710 is coupled to the chip system 600. The electronic device 700 supports performing at least one step in the foregoing method embodiments. The electronic device 700 provided in this embodiment of this application is configured to implement functions of the steps of the corresponding communication method. Because the steps have been described in detail in the foregoing communication method embodiments, details are not described herein again.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein in the method, a plurality of tasks are executed based on a first chip, the plurality of tasks comprise a first scheduling subtask, a first compute subtask, and a first transmission subtask, and the first chip comprises a first scheduler, a first AI accelerator, and a first memory reader; and the method comprises:
outputting, by the first scheduler, a first trigger signal to the first AI accelerator based on the first scheduling subtask;
performing, by the first AI accelerator, AI computing to obtain first data based on the first compute subtask, and in response to the first trigger signal, and outputting a first completion signal to the first scheduler, wherein the first data is data required by a second chip to perform AI computing, and the first completion signal indicates that the first compute subtask has been completed;
outputting, by the first scheduler, a second trigger signal to the first memory reader based on the first scheduling subtask and the first completion signal; and
transmitting, by the first memory reader, the first data to the second chip based on the first transmission subtask, and in response to the second trigger signal.

2. The method according to claim 1, wherein outputting, by the first scheduler, the second trigger signal to the first memory reader based on the first scheduling subtask and the first completion signal comprises:
outputting, by the first scheduler, the second trigger signal to the first memory reader based on the first scheduling subtask and the first completion signal, and in response to a first indication signal, wherein the first indication signal indicates that the second chip has processed second data, and the second data is data obtained by the first AI accelerator by performing previous AI computing.

3. The method according to claim 2, wherein the first chip further comprises a first notification circuit, and the plurality of tasks further comprise a first notification subtask; and the method further comprises:
receiving, by the first notification circuit, a first notification signal from the second chip based on the first notification subtask, and outputting the first indication signal obtained based on the first notification signal to the first scheduler, wherein the first notification signal indicates that the second chip has processed the second data.

4. The method according to claim 3, wherein the method further comprises:
after the first memory reader transmits the first data to the second chip, outputting, by the first scheduler, a third trigger signal to the first notification circuit based on the first scheduling subtask; and
sending, by the first notification circuit, a second notification signal to the second chip based on the first notification subtask, and in response to the third trigger signal, wherein the second notification signal indicates the second chip to perform AI computing based on the first data.

5. The method according to any one of claims 1 to 4, wherein the first chip further comprises a first storage; and
performing, by the first AI accelerator, AI computing to obtain the first data based on the first compute subtask, and in response to the first trigger signal comprises:
performing, by the first AI accelerator, AI computing to obtain the first data based on the first compute subtask, and in response to the first trigger signal, and writing the first data into first storage space of the first storage; and
transmitting, by the first memory reader, the first data to the second chip based on the first transmission subtask, and in response to the second trigger signal comprises:
reading, by the first memory reader, the first data from the first storage space based on the first transmission subtask, and in response to the second trigger signal, and transmitting the first data to the second chip.

6. The method according to any one of claims 1 to 5, wherein the plurality of tasks further comprise a second compute subtask; and the method further comprises:
after the first chip receives third data from the second chip, outputting, by the first scheduler, a fourth trigger signal to the first AI accelerator based on the first scheduling subtask, wherein the third data is data obtained by the second chip by performing AI computing based on the first data; and
performing, by the first AI accelerator, AI computing based on the second compute subtask and the third data, and in response to the fourth trigger signal.

7. The method according to any one of claims 1 to 6, wherein the first chip further comprises a first processor; and the method further comprises:
outputting, by the first processor, an execution sequence of the plurality of tasks to the first scheduler based on a request of a first application run by the first processor.

8. A communication method, wherein in the method, a plurality of tasks are executed based on a second chip, the plurality of tasks comprise a second scheduling subtask and a third compute subtask, and the second chip comprises a second scheduler and a second AI accelerator; and the method comprises:
after the second chip receives first data from a first chip, outputting, by the second scheduler, a fifth trigger signal to the second AI accelerator based on the second scheduling subtask; and
performing, by the second AI accelerator, AI computing based on the third compute subtask and the first data, and in response to the fifth trigger signal.

9. The method according to claim 8, wherein performing, by the second AI accelerator, AI computing based on the third compute subtask and the first data, and in response to the fifth trigger signal comprises:
performing, by the second AI accelerator, AI computing based on the third compute subtask and the first data, and in response to the fifth trigger signal, and outputting a second completion signal to the second scheduler, wherein the second completion signal indicates that AI computing performed based on the first data is completed; and
the method further comprises:
sending, by the second scheduler, a third notification signal to the first chip based on the second scheduling subtask and the second completion signal, wherein the third notification signal indicates that the second chip has processed the first data.

10. The method according to claim 9, wherein the second chip further comprises a second notification circuit, and the plurality of tasks further comprise a second notification subtask; and
sending, by the second scheduler, the third notification signal to the first chip based on the second scheduling subtask and the second completion signal comprises:
outputting, by the second scheduler, a sixth trigger signal to the second notification circuit based on the second scheduling subtask and the second completion signal; and
sending, by the second notification circuit, the third notification signal to the first chip based on the second notification subtask, and in response to the sixth trigger signal.

11. The method according to claim 10, wherein the method further comprises:
receiving, by the second notification circuit, a second notification signal from the first chip based on the second notification subtask, and outputting a second indication signal obtained based on the second notification signal to the second scheduler, wherein the second notification signal indicates the second chip to perform AI computing based on the first data, and the second indication signal indicates the second scheduler to output the fifth trigger signal to the second AI accelerator.

12. The method according to any one of claims 8 to 11, wherein the second chip further comprises a second storage, second storage space of the second storage is used to store the first data, and the second storage space is storage space for the second chip to perform memory registration (MR) for the first chip; and
performing, by the second AI accelerator, AI computing based on the third compute subtask and the first data, and in response to the fifth trigger signal comprises:
reading, by the second AI accelerator, the first data from the second storage space based on the third compute subtask, and in response to the fifth trigger signal, and performing AI computing based on the first data.

13. The method according to any one of claims 8 to 12, wherein the second chip further comprises a second memory reader, and the plurality of tasks further comprise a second transmission subtask; and the method further comprises:
after the second AI accelerator completes AI computing based on the first data, outputting, by the second scheduler, a seventh trigger signal to the second memory reader based on the second scheduling subtask; and
transmitting, by the second memory reader, third data to the first chip based on the second transmission subtask, and in response to the seventh trigger signal, wherein the third data is data obtained by the second AI accelerator by performing AI computing based on the first data.

14. The method according to any one of claims 8 to 13, wherein the second chip further comprises a second processor; and the method further comprises:
outputting, by the second processor, an execution sequence of the plurality of tasks to the second scheduler based on a request of a second application run by the second processor.

15. A communication apparatus, wherein the apparatus is used in a first chip, the apparatus is configured to execute a plurality of tasks, the plurality of tasks comprise a first scheduling subtask, a first compute subtask, and a first transmission subtask, and the apparatus comprises a first scheduler, a first AI accelerator, and a first memory reader;
the first scheduler is configured to output a first trigger signal to the first AI accelerator based on the first scheduling subtask;
the first AI accelerator is configured to: perform AI computing to obtain first data based on the first compute subtask, and in response to the first trigger signal, and output a first completion signal to the first scheduler, wherein the first data is data required by a second chip to perform AI computing, and the first completion signal indicates that the first compute subtask has been completed;
the first scheduler is configured to output a second trigger signal to the first memory reader based on the first scheduling subtask and the first completion signal; and
the first memory reader is configured to transmit the first data to the second chip based on the first transmission subtask, and in response to the second trigger signal.

16. The apparatus according to claim 15, wherein the first scheduler is specifically configured to output the second trigger signal to the first memory reader based on the first scheduling subtask and the first completion signal, and in response to a first indication signal, wherein the first indication signal indicates that the second chip has processed second data, and the second data is data obtained by the first AI accelerator by performing previous AI computing.

17. The apparatus according to claim 16, wherein the apparatus further comprises a first notification circuit, and the plurality of tasks further comprise a first notification subtask; and
the first notification circuit is configured to: receive a first notification signal from the second chip based on the first notification subtask, and output the first indication signal obtained based on the first notification signal to the first scheduler, wherein the first notification signal indicates that the second chip has processed the second data.

18. The apparatus according to claim 17, wherein
after the first memory reader transmits the first data to the second chip, the first scheduler is further configured to output a third trigger signal to the first notification circuit based on the first scheduling subtask; and
the first notification circuit is further configured to send a second notification signal to the second chip based on the first notification subtask, and in response to the third trigger signal, wherein the second notification signal indicates the second chip to perform AI computing based on the first data.

19. The apparatus according to any one of claims 15 to 18, wherein the apparatus further comprises a first storage;
the first AI accelerator is specifically configured to: perform AI computing to obtain the first data based on the first compute subtask, and in response to the first trigger signal, and write the first data into first storage space of the first storage; and
the first memory reader is specifically configured to: read the first data from the first storage space based on the first transmission subtask, and in response to the second trigger signal, and transmit the first data to the second chip.

20. The apparatus according to any one of claims 15 to 19, wherein the plurality of tasks further comprise a second compute subtask;
after the first chip receives third data from the second chip, the first scheduler is further configured to output a fourth trigger signal to the first AI accelerator based on the first scheduling subtask, wherein the third data is data obtained by the second chip by performing AI computing based on the first data; and
the first AI accelerator is further configured to perform AI computing based on the second compute subtask and the third data, and in response to the fourth trigger signal.

21. The apparatus according to any one of claims 15 to 20, wherein the first chip further comprises a first processor; and
the first processor is configured to output an execution sequence of the plurality of tasks to the first scheduler based on a request of a first application run by the first processor.

22. A communication apparatus, wherein the apparatus is used in a second chip, the apparatus is configured to execute a plurality of tasks, the plurality of tasks comprise a second scheduling subtask and a third compute subtask, and the apparatus comprises a second scheduler and a second AI accelerator;
after the second chip receives first data from a first chip, the second scheduler is configured to output a fifth trigger signal to the second AI accelerator based on the second scheduling subtask; and
the second AI accelerator is configured to perform AI computing based on the third compute subtask and the first data, and in response to the fifth trigger signal.

23. The apparatus according to claim 22, wherein
the second AI accelerator is specifically configured to: perform AI computing based on the third compute subtask and the first data, and in response to the fifth trigger signal, and output a second completion signal to the second scheduler, wherein the second completion signal indicates that AI computing performed based on the first data is completed; and
the second scheduler is further configured to send a third notification signal to the first chip based on the second scheduling subtask and the second completion signal, wherein the third notification signal indicates that the second chip has processed the first data.

24. The apparatus according to claim 23, wherein the second chip further comprises a second notification circuit, and the plurality of tasks further comprise a second notification subtask;
the second scheduler is specifically configured to output a sixth trigger signal to the second notification circuit based on the second scheduling subtask and the second completion signal; and
the second notification circuit is specifically configured to send the third notification signal to the first chip based on the second notification subtask, and in response to the sixth trigger signal.

25. The apparatus according to claim 24, wherein
the second notification circuit is further configured to: receive a second notification signal from the first chip based on the second notification subtask, and output a second indication signal obtained based on the second notification signal to the second scheduler, wherein the second notification signal indicates the second chip to perform AI computing based on the first data, and the second indication signal indicates the second scheduler to output the fifth trigger signal to the second AI accelerator.

26. The apparatus according to any one of claims 22 to 25, wherein the second chip further comprises a second storage, second storage space of the second storage is used to store the first data, and the second storage space is storage space for the second chip to perform memory registration (MR) for the first chip; and
the second AI accelerator is specifically configured to: read the first data from the second storage space based on the third compute subtask, and in response to the fifth trigger signal, and perform AI computing based on the first data.

27. The apparatus according to any one of claims 22 to 26, wherein the second chip further comprises a second memory reader, and the plurality of tasks further comprise a second transmission subtask;
after the second AI accelerator completes AI computing based on the first data, the second scheduler is further configured to output a seventh trigger signal to the second memory reader based on the second scheduling subtask; and
the second memory reader is further configured to transmit third data to the first chip based on the second transmission subtask, and in response to the seventh trigger signal, wherein the third data is data obtained by the second AI accelerator by performing AI computing based on the first data.

28. The apparatus according to any one of claims 22 to 27, wherein the second chip further comprises a second processor; and
the second processor is further configured to output an execution sequence of the plurality of tasks to the second scheduler based on a request of a second application run by the second processor.

29. A chip system, wherein the system comprises a first chip and a second chip, the first chip comprises the communication apparatus according to any one of claims 15 to 21, and the second chip comprises the communication apparatus according to any one of claims 22 to 28.

30. An electronic device, wherein the electronic device comprises an interface circuit and the chip system according to claim 29, and the interface circuit is coupled to the chip system.
